# EUROPEAN PATENT APPLICATION

(11) **EP 4 606 221 A2**
(43) Date of publication of application: **27.08.2025**
(21) Application number: 25173728.4
(22) Date of filing: 12.07.2012
(51) Int. Cl.: A23J 1/14

(54) **METHODS AND COMPOSITIONS FOR CONSUMABLES**

(30) Priority: 12.07.2011 US 201161572205 P
(62) Divisional of application: 12810661.4
(71) Applicant: Impossible Foods Inc., Redwood City, CA 94063 (US)
(72) Inventor: BROWN, Patrick, Stanford, 94305 (US); VRLJIC, Marija, San Mateo, 94403 (US); VARADAN, Ranjani, Fremont, 94536 (US); EISEN, Michael, Berkeley, 94703 (US); SOLOMATIN, Sergey, Mountain View, 94040 (US)
(74) Representative: Haseltine Lake Kempner LLP

(57) **Abstract**

Provided herein are methods and compositions related to plant based meat substitutes which have properties similar to meat.

## Description

This application claims priority to U.S. application Ser. No. 61/572,205 filed July 12, 2011, which is incorporated herein in its entirety by reference.

### BACKGROUND OF THE INVENTION

Animal farming has a profound negative environmental impact. Currently it is estimated that 30% of Earth's land surface is dedicated to animal farming and that livestock account for 20% of total terrestrial animal biomass. Due to this massive scale animal farming accounts for more than 18% of net greenhouse gas emissions. Animal farming may be the largest human source of water pollution, and animal farming is by far the world's largest threat to biodiversity. It has been estimated that if the worlds human population could shift from a meat containing diet to a diet free of animal products, 26% of Earth's land surface would be freed for other uses. Furthermore the shift to a vegetarian diet would massively reduce water and energy consumption.

The consumption of meat has a profound negative impact on human health. The heath benefits of a vegetarian diet are well established. If the human population would shift to a vegetarian diet the cost savings in health care would be significant.

Hunger is a worldwide problem, yet the world's 4 major commodity crops (soybeans, maize, wheat, and rice) already supply more than 100% of the human population's requirements for calories and protein, including every essential amino acid.

Plant based meat substitutes have largely failed to cause a shift to a vegetarian diet. The current state of the art for meat substitute compositions involves the extrusion of soy/grain mixture, resulting in products which largely fail to replicate the experience of cooking and eating meat. Common limitations of these products are a texture and mouthfeel that are more homogenous than that of equivalent meat products. Furthermore, as the products must largely be sold pre-cooked, with artificial flavors and aromas built in, they fail to replicate aromas, flavors, and other key features associated with cooking meat. As a result, these products appeal mainly to a limited consumer base that is already committed to vegetarianism/veganism, but have failed to appeal to the larger consumer segment accustomed to eating meat.

Disclosed herein are improved methods and compositions which more accurately replicate the characteristics that consumers value in the preparation and consumption of meat and which overcome the shortcomings and drawbacks of current meat substitutes.

### SUMMARY OF THE INVENTION

In some aspects, the invention provides a meat substitute composition comprising a protein content, wherein one or more isolated and purified proteins accounts for 10% or more of said protein content by weight, wherein said meat substitute composition accurately mimics the taste, texture, or color of a meat product derived from animal sources.

In one embodiment, the meat substitute composition accurately mimics the color of said meat product in its raw state and in a cooked state after cooking.

In another embodiment, the one or more isolated and purified proteins accounts for 25% or more of said protein content by weight.

In another embodiment, the one or more isolated and purified proteins accounts for 50% or more of said protein content by weight.

In another embodiment, the one or more isolated and purified proteins accounts for 75% or more of said protein content by weight.

In another embodiment, the one or more isolated and purified proteins accounts for 90% or more of said protein content by weight.

In another embodiment, gluten does not account for 10% or more of said protein content by weight.

In another embodiment, each of said isolated, purified proteins is separately isolated and purified.

In another embodiment, the meat substitute composition comprises 1-7 isolated and purified proteins.

In another embodiment, said 1-7 isolated and purified proteins are each isolated from different plant species.

In some embodiments the meat substitute comprises less than 5, 6, 7, 8, 9, 10, 11, 12, 13, 14, 15, 16, 17, 18, 19, or 20 individual proteins isolated from one or more plant species.

In another embodiment, said protein content comprises no more than trace amounts of any other proteins derived from the one or more plant species.

In another embodiment, said one or more isolated and purified proteins are selected from the group consisting of leghemoglobin, non-symbiotic hemoglobin, hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin.

In another embodiment, said one or more isolated and purified proteins are not isolated from an animal.

In another embodiment, said one or more isolated and purified proteins are isolated from a single plant source.

In another embodiment, said one or more isolated and purified proteins are isolated from multiple plant sources.

In another embodiment, wherein said one or more isolated, purified proteins are isolated from a genetically modified organism.

In some embodiments, said genetically modified organism is a genetically modified bacteria or yeast organism.

In some embodiments, said isolated, purified protein has been formed into fibers.

In particular embodiments, said fibers resemble skeletal muscle fibers.

In yet more particular embodiments, said fibers are asymmetric fibers.

In some embodiments, the meat substitute composition further comprises one or more isolated and purified iron-containing proteins.

In some embodiments, said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, and Hell's gate globin I, bacterial hemoglobins, ciliate myoglobins, flavohemoglobins,.

In a particular embodiment, said iron-containing protein comprises an amino acid sequence with at least 70% homology to SEQ ID NO 1. SEQ ID NO 1:

In a particular embodiment, said iron-containing protein comprises an amino acid sequence with at least 70% homology to SEQ ID NO 2. SEQ ID NO 2: MIDQKEKELI KESWKRIEPN KNEIGLLFYA NLFKEEPTVS VLFQNPISSQ SRKLMQVLGI LVQGIDNLEG LIPTLQDLGR RHKQYGVVDS HYPLVGDCLL KSIQEYLGQG FTEEAKAAWT KVYGIAAQVM TAE. In some embodiments said iron-containing protein comprises an amino acid sequence with at least 80% homology to SEQ ID NO 2. In some embodiments said iron-containing protein comprises an amino acid sequence with at least 90% homology to SEQ ID NO 2. In some embodiments said iron-containing protein comprises an amino acid sequence with at least 98% homology to SEQ ID NO 2.

In a particular embodiment, said iron-containing protein comprises an amino acid sequence with at least 70% homology to SEQ ID NO 3. SEQ ID NO 3: MRKQPTVFEK LGGQAAMHAA VPLFYKKVLA DDRVKHYFKN TNMEHQAKQQ EDFLTMLLGG PNHYKGKNMA EAHKGMNLQN SHFDAIIENL AATLKELGVS DQIIGEAAKV IEHTRKDCLG K. In some embodiments said iron-containing protein comprises an amino acid sequence with at least 80% homology to SEQ ID NO 3. In some embodiments said iron-containing protein comprises an amino acid sequence with at least 90% homology to SEQ ID NO 3. In some embodiments said iron-containing protein comprises an amino acid sequence with at least 98% homology to SEQ ID NO 3.

In some embodiments, the isolated and purified proteins are assembled into one or more gels.

In some embodiments, the meat substitute composition further comprises one or more fats.

In particular embodiments, said one or more fats are derived from a plant source.

In another aspect, the invention provides a meat substitute product that comprises an indicator that indicates cooking progression from a raw state to a cooked state, wherein said meat substitute product is derived from non-animal sources.

In some embodiments, said indicator is a visual indicator that accurately mimics the color transition of a meat product during said cooking progression.

In one embodiment, said color transition is from red to brown.

In one embodiment, said color transition is from pink to white or tan.

In one embodiment, said visual indicator transitions from a translucent to opaque color during said cooking progression.

In some embodiments, the indicator is an olfactory indicator that indicates cooking progression.

In one embodiment, said olfactory indicator is one or more volatile odorants released during cooking.

In some embodiments, said indicator comprises one or more isolated, purified iron-containing proteins.

In particular embodiments, said one or more isolated, purified iron-containing proteins is in a reduced state before cooking.

In one embodiment, said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins.

In a particular embodiment, said iron-containing protein comprises an amino acid sequence with at least 70% homology to SEQ ID NO 1. SEQ ID NO 1:

In some embodiments, said one or more isolated and purified iron-containing proteins are not isolated from an animal. In some embodiments compositions of the invention do not contain any proteins from an animal.

In particular embodiments, said one or more isolated and purified iron-containing proteins are isolated from one or more plant sources.

In yet more particular embodiments, said one or more isolated, purified proteins are isolated from the root nodules, roots, seeds, leaves, or stems of said one or more plant sources.

In other particular embodiments, said one or more plant sources are soy or pea plants.

In one embodiment, said one or more plant sources comprises one or more plants of the legume family.

In some embodiments, said one or more isolated and purified iron carrying proteins in a reduced or oxidized state has a similar UV-VIS profile to a myoglobin protein derived from an animal source when in an equivalent reduced or oxidized state.

In a particular embodiment, the difference between the peak absorbance wavelength of said one or more isolated and purified iron-containing proteins and the peak absorbance wavelength of myoglobin derived from an animal source is less than 5%.

In some embodiments, said one or more isolated, purified proteins are isolated from a genetically modified organism.

In one embodiment, said genetically modified organism is a genetically modified bacteria or yeast organism.

In some embodiments, the meat substitute product contains no methylcellulose, no carrageenan, no caramel color, no konjac flour, no gum arabic, and no acacia gum.

In particular embodiments, the meat substitute product additionally contains less than 1% wheat gluten.

In a more particular embodiment, said meat substitute product contains no wheat gluten.

In other particular embodiments, said meat substitute product contains no soy protein isolate.

In other particular embodiments, said meat substitute product contains no soy protein concentrate.

In other particular embodiments, said meat substitute product contains no soy protein.

In a more particular embodiment, said meat substitute product contains less than 5% carbohydrates.

In other particular embodiments, said meat substitute product contains no tofu.

In some embodiments, said meat substitute product contains no tofu, and no wheat gluten.

In some embodiments, said meat substitute product contains no soy protein, and no wheat gluten.

In some embodiments, said meat substitute product contains no animal products and less than 5% carbohydrates.

In some embodiments, said meat substitute product contains less than 1% cellulose.

In some embodiments, said meat substitute product contains less than 5% insoluble carbohydrates.

In some embodiments, said meat substitute product contains no soy protein, and less than 1% cellulose.

In some embodiments, said meat substitute product contains no soy protein, and less than 5% insoluble carbohydrates.

In some embodiments, said meat substitute product contains no wheat gluten, and less than 1% cellulose.

In some embodiments, said meat substitute product contains no wheat gluten, and less than 5% insoluble carbohydrates.

In another aspect, the invention provides a muscle tissue replica comprising a protein content, wherein said protein content comprises one or more isolated and purified proteins, wherein said muscle tissue replica approximates the taste, texture, or color of an equivalent muscle tissue derived from an animal source.

In some embodiments, said one or more isolated and purified proteins accounts for at least 50% of said protein content by weight. In some embodiments, said one or more isolated and purified proteins accounts for at least 40% of said protein content by weight. In some embodiments, said one or more isolated and purified proteins accounts for at least 30% of said protein content by weight. In some embodiments, said one or more isolated and purified proteins accounts for at least 20% of said protein content by weight. In some embodiments, said one or more isolated and purified proteins accounts for at least 10% of said protein content by weight.

In some embodiments, said one or more isolated and purified proteins accounts for at least 50% of said composition content by weight. In some embodiments, said one or more isolated and purified proteins accounts for at least 40% of said composition content by weight. In some embodiments, said one or more isolated and purified proteins accounts for at least 30% of said composition content by weight. In some embodiments, said one or more isolated and purified proteins accounts for at least 20% of said composition content by weight. In some embodiments, said one or more isolated and purified proteins accounts for at least 10% of said composition content by weight. In some embodiments, said one or more isolated and purified proteins accounts for at least 5% of said composition content by weight. In some embodiments, said one or more isolated and purified proteins accounts for at least 1% of said composition content by weight.

In some embodiments, said protein content is derived from one or more non-animal sources.

In particular embodiments, said one or more non-animal sources is a plant source.

In other particular embodiments, said one or more non-animal sources is a genetically modified yeast or bacteria.

In some embodiments, each of said one or more isolated proteins is isolated and purified separately.

In some embodiments, said one or more isolated proteins are selected from the group consisting of hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin..

In one embodiment, said seed storage protein is moong bean 8S protein.

In some embodiments, said protein content is suspended in a gel.

In some embodiments, said protein content is in the form of a gel.

In one embodiment, said gel comprises an isolated, purified cross-linking enzyme.

In some embodiments, said isolated, purified cross-linking enzyme is selected from the group consisting of transglutaminase, lysyl oxidases, and amine oxidases.

In a particular embodiment, said isolated, purified cross-linking enzyme is transglutaminase.

In some embodiments, said protein content has been assembled into fibers.

In particular embodiments, said fibers are arranged isotropically.

In one embodiment, said fibers are asymmetric fibers.

In some embodiments, the muscle tissue replica further comprises one or more isolated and purified iron-containing proteins.

In some embodiments, said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins.

In a particular embodiment, said one or more isolated and purified iron-containing proteins comprises an amino acid sequence with at least 70% homology to SEQ ID NO 1. SEQ ID NO 1: MV AFTEKQDAL VSSSFEAFKANIPQYSVVFYTSILEKAP AAKDLFSFLANGVDPTNPKL TGHAEK LFALVRDSAGQLKASGTVVADAALGSVHAQKAVTDPQFVVVKEALLKTIKAAVGDKWSDELS RAWEVAYDELAAAIKKA. In a particular embodiment, said one or more isolated and purified iron-containing proteins comprises an amino acid sequence with at least 80% homology to SEQ ID NO 1. In a particular embodiment, said one or more isolated and purified iron-containing proteins comprises an amino acid sequence with at least 90% homology to SEQ ID NO 1. In a particular embodiment, said one or more isolated and purified iron-containing proteins comprises an amino acid sequence with at least 95% homology to SEQ ID NO 1. In a particular embodiment, said one or more isolated and purified iron-containing proteins comprises an amino acid sequence with at least 98% homology to SEQ ID NO 1.

In particular embodiments, the muscle tissue replica comprises a protein content, wherein (i) one isolated and purified protein that is not an iron-containing protein accounts for 40-95% of said protein content, (ii) one or more isolated and purified iron-containing proteins accounts for 1-20% of said protein content, and (iii) one or more cross-linking reagents accounts for 0.1-35% of said protein content.

In one embodiment, said protein content accounts for 5-50% of said replica by weight or by weight/volume.

In one embodiment, said one isolated and purified protein is moong bean 8S protein.

In one embodiment, said one or more isolated and purified iron-containing proteins is leghemoglobin.

In one embodiment, said one or more cross-linking reagents is transglutaminase.

In some embodiments, the muscle tissue replica contains no methylcellulose, no carrageenan, no caramel color, no konjac flour, no gum arabic, and no acacia gum.

In particular embodiments, the muscle tissue replica additionally contains less than 1% wheat gluten. In particular embodiments, the muscle tissue replica additionally contains less than 5% wheat gluten. In particular embodiments, the muscle tissue replica additionally contains less than 10% wheat gluten. In particular embodiments, the muscle tissue replica additionally contains less than 0.1% wheat gluten.

In a more particular embodiment, said muscle tissue replica contains no wheat gluten.

In other particular embodiments, said muscle tissue replica contains no soy protein isolate.

In other particular embodiments, said muscle tissue replica contains no soy protein concentrate.

In other particular embodiments, said muscle tissue replica contains no soy protein.

In a more particular embodiment, said muscle tissue replica contains less than 5% carbohydrates.

In other particular embodiments, said muscle tissue replica contains no tofu.

In some embodiments, said muscle tissue replica contains no tofu, and no wheat gluten.

In some embodiments, said muscle tissue replica contains no soy protein, and no wheat gluten.

In some embodiments, said muscle tissue replica contains no animal products and less than 5% carbohydrates.

In some embodiments, said muscle tissue replica contains less than 1% cellulose.

In some embodiments, said muscle tissue replica contains less than 5% insoluble carbohydrates.

In some embodiments, said muscle tissue replica contains no soy protein, and less than 1% cellulose.

In some embodiments, said muscle tissue replica contains no soy protein, and less than 5% insoluble carbohydrates.

In some embodiments, said muscle tissue replica contains no wheat gluten, and less than 1% cellulose.

In some embodiments, said muscle tissue replica contains no wheat gluten, and less than 5% insoluble carbohydrates.

In some embodiments, the muscle tissue replica contains no methylcellulose, no carrageenan, no caramel color, no konjac flour, no gum arabic, and no acacia gum.

In particular embodiments, the meat replica contains less than 1% wheat gluten. In particular embodiments, the meat replica contains less than 5% wheat gluten. In particular embodiments, the meat replica contains less than 10% wheat gluten. In particular embodiments, the meat replica contains less than 0.1% wheat gluten.

In a more particular embodiment, the meat replica contains no wheat gluten.

In other particular embodiments, the meat replica contains no soy protein isolate.

In other particular embodiments, the meat replica contains no soy protein concentrate.

In other particular embodiments, the meat replica contains no soy protein.

In a more particular embodiment, the meat replica contains less than 5% carbohydrates.

In other particular embodiments, the meat replica contains no tofu.

In some embodiments, the meat replica contains no tofu, and no wheat gluten.

In some embodiments, the meat replica contains no soy protein, and no wheat gluten.

In some embodiments, the meat replica contains no animal products and less than 5% carbohydrates.

In some embodiments, the meat replica contains less than 1% cellulose. In some embodiments, the meat replica contains less than 0.1% cellulose. In some embodiments, the meat replica contains less than 10% cellulose. In some embodiments, the meat replica contains less than 5% cellulose.

In some embodiments, the meat replica contains less than 5% insoluble carbohydrates.

In some embodiments, the meat replica contains no soy protein, and less than 1% cellulose.

In some embodiments, the meat replica contains no soy protein, and less than 5% insoluble carbohydrates.

In some embodiments, the meat replica contains no wheat gluten, and less than 1% cellulose.

In some embodiments, the meat replica contains no wheat gluten, and less than 5% insoluble carbohydrates.

In another aspect, the invention provides a fat tissue replica comprising a gelled emulsion, said gelled emulsion comprising a protein solution with fat droplets suspended therein.

In some embodiments, said fat droplets are derived from a non-animal source.

In some embodiments, said fat droplets are comprised of one or more plant oils.

In some embodiments, said one or more plant oils is selected from the group consisting of corn oil, olive oil, soy oil, peanut oil, walnut oil, almond oil, sesame oil, cottonseed oil, rapeseed oil, canola oil, safflower oil, sunflower oil, flax seed oil, algal oil, palm oil, palm kernel oil, coconut oil, babassu oil, shea butter, mango butter, cocoa butter, wheat germ oil, rice bran oil, oils produced by bacteria, algae, archaea or fungi or genetically engineered bacteria, algae, archaea or fungi, triglycerides, monoglycerides, diglycerides, sphingosides, glycolipids, lecithin, lysolecithin, phophatidic acids, lysophosphatidic acids, oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, conjugated oleic acid, or esters of: oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or glycerol esters of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or triglyceride derivatives of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid.

In one embodiment, said one or more plant oils is rice bran oil or canola oil.

In some embodiments, said protein solution comprises one or more isolated, purified proteins.

In some embodiments, said one or more isolated, purified proteins accounts for 75% or more of the protein in said protein solution.

In some embodiments, said one or more isolated, purified proteins are derived from a non-animal source.

In some embodiments, said non-animal source is a plant source.

In some embodiments, said non-animal source is a genetically modified yeast or bacteria.

In some embodiments, each of said one or more isolated proteins is isolated and purified separately.

In some embodiments, said one or more isolated proteins are selected from the group consisting of hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin..

In some embodiments, said one or more isolated, purified proteins is an albumin protein, a seed storage protein, or pea globulin protein.

In particular embodiments, said albumin protein is isolated pea albumin protein.

In some embodiments, said seed storage protein is moong bean 8S protein.

In some embodiments, said gelled emulsion comprises a protein solution comprising 1-3 isolated and purified proteins, wherein said solution accounts for 30-70% of the volume of said emulsion; a plant oil, wherein said plant oil accounts for 30-70% of the volume of said emulsion; and an isolated, purified cross-linking enzyme, wherein said cross-linking enzyme accounts for 0.5-5% of said emulsion by wt/volume; wherein said plant oil is emulsified in said protein solution, wherein said emulsion is formed into a gel by said cross-linking enzyme.

In other embodiments said gelled emulsion comprises a protein solution comprising 1-3 isolated and purified proteins, wherein said solution accounts for 1-30% of the volume of said emulsion; a plant oil, wherein said plant oil accounts for 70-99% of the volume of said emulsion; and an isolated, purified cross-linking enzyme, wherein said cross-linking enzyme accounts for 0.5-5% of said emulsion by wt/volume; wherein said plant oil is emulsified in said protein solution, wherein said emulsion is formed into a gel by said cross-linking enzyme.

In some embodiments, the fat replica further comprises a cross-linking enzyme.

In some embodiments, said cross-linking enzyme is transglutaminase.

In some embodiments, one of said 1-3 isolated and purified proteins is moong bean 8S protein, pea albumin protein, or pea globulin protein.

In particular embodiments, said plant oil is rice bran oil or canola oil.

In some embodiments, the fat tissue replica contains no methylcellulose, no carrageenan, no caramel color, no konjac flour, no gum arabic, and no acacia gum.

In particular embodiments, the fat tissue replica additionally contains less than 1% wheat gluten.

In a more particular embodiment, said fat tissue replica contains no wheat gluten.

In other particular embodiments, said fat tissue replica contains no soy protein isolate.

In other particular embodiments, said fat tissue replica contains no soy protein concentrate.

In other particular embodiments, said fat tissue replica contains no soy protein.

In a more particular embodiment, said fat tissue replica contains less than 5% carbohydrates.

In other particular embodiments, said fat tissue replica contains no tofu.

In some embodiments, said fat tissue replica contains no tofu, and no wheat gluten.

In some embodiments, said fat tissue replica contains no soy protein, and no wheat gluten.

In some embodiments, said fat tissue replica contains no animal products and less than 5% carbohydrates.

In some embodiments, said fat tissue replica contains less than 1% cellulose.

In some embodiments, said fat tissue replica contains less than 5% insoluble carbohydrates.

In some embodiments, said fat tissue replica contains no soy protein, and less than 1% cellulose.

In some embodiments, said fat tissue replica contains no soy protein, and less than 5% insoluble carbohydrates.

In some embodiments, said fat tissue replica contains no wheat gluten, and less than 1% cellulose.

In some embodiments, said fat tissue replica contains no wheat gluten, and less than 5% insoluble carbohydrates.

In another aspect, the invention provides a connective tissue replica, comprising a protein content comprising one or more isolated, purified proteins, wherein said protein content has been assembled into structures approximating the texture and visual appearance of connective tissue or skin.

In some embodiments, said protein content is derived from non-animal source.

In some embodiments, said non-animal source is a plant source.

In some embodiments, said non-animal source is a genetically modified yeast or bacteria.

In some embodiments, said one or more isolated proteins account for 50% or more of said protein content by weight.

In some embodiments, said one isolated and purified protein accounts for 90% or more of said protein content by weight.

In some embodiments, each of said one or more isolated proteins is isolated and purified separately.

In some embodiments, said one or more isolated proteins are selected from the group consisting of hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin.

In some embodiments, said one or more isolated and purified proteins is a prolamin family protein.

In some embodiments, said one or more isolated and purified proteins is zein.

In some embodiments, said protein content is suspended in a gel.

In some embodiments, said gel comprises an isolated, purified cross-linking enzyme.

In some embodiments, said isolated, purified cross-linking enzyme is selected from the group consisting of transglutaminase, lysyl oxidases, and amine oxidases.

In some embodiments, said isolated, purified cross-linking enzyme is transglutaminase.

In some embodiments, said protein content is formed into a fiber.

In some embodiments, said fiber is produced by an extrusion process.

In some embodiments, said fiber is stabilized by protein crosslinks.

In some embodiments, fiber contains an isolated, purified cross-linking enzyme.

In some embodiments, said isolated, purified cross-linking enzyme is selected from the group consisting of transglutaminase, lysyl oxidases, and amine oxidases.

In some embodiments, said isolated, purified cross-linking enzyme is transglutaminase.

In another aspect, the invention provides a meat substitute product, comprising a muscle replica; a fat tissue replica; and a connective tissue replica; wherein said muscle replica, fat tissue replica, and/or connective tissue replica are assembled in a manner that approximates the physical organization of meat.

In some embodiments, the meat substitute product comprises two or more of said muscle replica, fat tissue replica, and connective tissue replica.

In some embodiments of the meat substitute product, said muscle replica accounts for 40-90% of said product by weight, said fat tissue replica accounts for 1-60% of said product by weight, and said connective tissue replica accounts for 1-30% of said product by weight.

In some embodiments, the meat substitute product comprises 60-90% water; 5-30% protein content; and 1-20% of a fat or fat replica; wherein said protein content comprises one or more isolated, purified plant proteins.

In some embodiments, said protein content is derived from non-animal source.

In some embodiments, non-animal source is a plant source.

In some embodiments, said non-animal source is a genetically modified yeast or bacteria.

In some embodiments, 50% or more of said protein content by weight are one or more isolated purified proteins.

In some embodiments, each of said one or more isolated proteins is isolated and purified separately from different plant species.

In some embodiments, one or more of said isolated proteins is selected from the group consisting of: hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin..

In some embodiments, the meat substitute product further comprises one or more isolated and purified iron-containing proteins.

In some embodiments, said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, and Hell's gate globin I, bacterial hemoglobins, ciliate myoglobins, flavohemoglobins,. In some embodiments, said iron-containing protein comprises an amino acid sequence with at least 70% homology to SEQ ID NO 1. [SEQ ID NO 1:

In some embodiments, the meat substitute product contains no methylcellulose, no carrageenan, no caramel color, no konjac flour, no gum arabic, and no acacia gum.

In particular embodiments, the meat substitute product additionally contains less than 1% wheat gluten.

In a more particular embodiment, said meat substitute product contains no wheat gluten.

In other particular embodiments, said meat substitute product contains no soy protein isolate.

In other particular embodiments, said meat substitute product contains no soy protein concentrate.

In other particular embodiments, said meat substitute product contains no soy protein.

In a more particular embodiment, said meat substitute product contains less than 5% carbohydrates.

In other particular embodiments, said meat substitute product contains no tofu.

In some embodiments, said meat substitute product contains no tofu, and no wheat gluten.

In some embodiments, said meat substitute product contains no soy protein, and no wheat gluten.

In some embodiments, said meat substitute product contains no animal products and less than 5% carbohydrates.

In some embodiments, said meat substitute product contains less than 1% cellulose.

In some embodiments, said meat substitute product contains less than 5% insoluble carbohydrates.

In some embodiments, said meat substitute product contains no soy protein, and less than 1% cellulose.

In some embodiments, said meat substitute product contains no soy protein, and less than 5% insoluble carbohydrates.

In some embodiments, said meat substitute product contains no wheat gluten, and less than 1% cellulose.

In some embodiments, said meat substitute product contains no wheat gluten, and less than 5% insoluble carbohydrates.

In another aspect, the invention provides a food product comprising one or more isolated, purified iron-containing proteins, wherein said food product is configured for consumption by an animal.

In some embodiments, said one or more isolated, purified iron-containing proteins is derived from a non-animal source.

In some embodiments, said non-animal source is a plant source.

In some embodiments, said plant source comprises one or more plants of the legume family.

In some embodiments, said one or more plants of the legume family is a soy or pea plant.

In some embodiments, said non-animal source is a genetically modified yeast or bacteria.

In some embodiments, said iron-containing protein is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins.

In one embodiment, said iron-containing protein comprises an amino acid sequence with at least 70% homology to SEQ ID NO 1. [SEQ ID NO 1:

In some embodiments, the food product contains no methylcellulose, no carrageenan, no caramel color, no konjac flour, no gum arabic, and no acacia gum.

In particular embodiments, the food product additionally contains less than 1% wheat gluten.

In a more particular embodiment, said food product contains no wheat gluten.

In other particular embodiments, said food product contains no soy protein isolate.

In other particular embodiments, said food product contains no soy protein concentrate.

In other particular embodiments, said food product contains no soy protein.

In a more particular embodiment, said food product contains less than 5% carbohydrates.

In other particular embodiments, said food product contains no tofu.

In some embodiments, said food product contains no tofu, and no wheat gluten.

In some embodiments, said food product contains no soy protein, and no wheat gluten.

In some embodiments, said food product contains no animal products and less than 5% carbohydrates.

In some embodiments, said food product contains less than 1% cellulose.

In some embodiments, said food product contains less than 5% insoluble carbohydrates.

In some embodiments, said food product contains no soy protein, and less than 1% cellulose.

In some embodiments, said food product contains no soy protein, and less than 5% insoluble carbohydrates.

In some embodiments, said food product contains no wheat gluten, and less than 1% cellulose.

In some embodiments, said food product contains no wheat gluten, and less than 5% insoluble carbohydrates.

In another aspect, the invention provides a method of making a meat substitute composition, comprising isolating and purifying one or more proteins; and assembling said one or more proteins into a physical organization that approximates the physical organization of meat.

In another aspect, the invention provides a method of making a muscle tissue replica, comprising isolating and purifying one or more proteins; and assembling said one or more proteins into a physical organization that approximates the physical organization of skeletal muscle.

In another aspect, the invention provides a method of making a fat tissue replica, comprising isolating and purifying one or more proteins; preparing a solution comprising one or more proteins; emulsifying one or more fats in said solution; and stabilizing said solution into a gelled emulsification with one or more cross-linking reagents.

In another aspect, the invention provides a method of making a connective tissue replica, comprising isolating and purifying one or more proteins; and precipitating said one or more proteins, wherein said precipitating results in said one or more proteins forming physical structures approximating the physical organization of connective tissue.

In some embodiments, said precipitating comprises solubilizing said one or more proteins in a first solution; and extruding said first solution into a second solution, wherein said one or more proteins is insoluble in said second solution, wherein said extruding induces precipitation of said one or more proteins.

In another aspect, the invention provides a food product comprising one or more isolated, purified iron-containing proteins, wherein said food product is configured for consumption by an animal.

In another aspect, the invention provides a food product comprising one or more isolated, purified iron-containing proteins, wherein said food product is configured for consumption by humans.

In another aspect, the invention provides a food product comprising one or more isolated, purified iron-containing proteins, wherein said food product is configured for consumption by an animal. In another aspect, the invention provides a food product comprising one or more isolated, purified iron-containing proteins, wherein said food product is configured for consumption by humans.

All publications and patent applications mentioned in this specification are herein incorporated by reference to the same extent as if each individual publication or patent application was specifically and individually indicated to be incorporated by reference.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

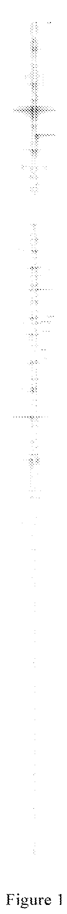

**Figure 1** depicts a comparison of aligned GCMS profiles (in mirrored orientations) of otherwise identical muscle-replica samples cooked in the presence of leghemoglobin (LHb, Right side profile) or Ferric ion (Left side profile). In this illustration, the vertical axis represents retention time in the gas chromatography separation step, and the horizontal axis represents m/z ratios of ions produced by fragmentation of the corresponding separated volatile compounds. Selected compounds differentially represented in the two samples are labeled on the Right of the figure.

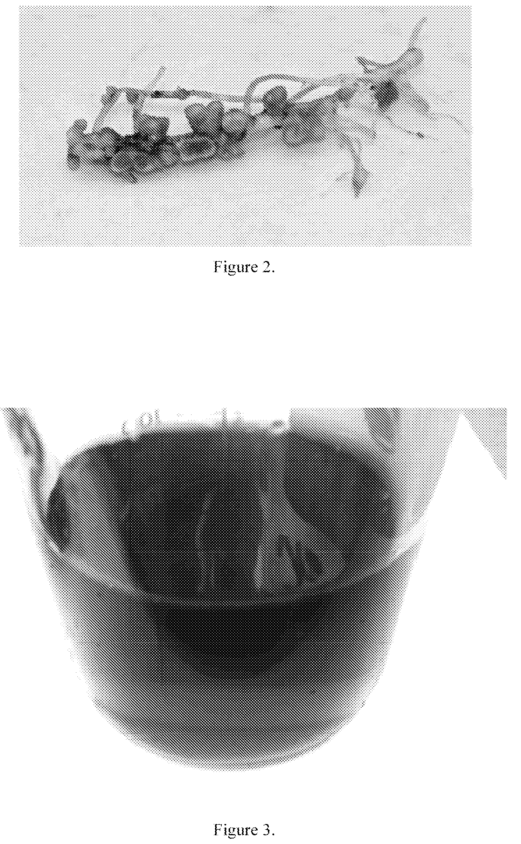

**Figure 2** depicts a portion of the root of a pea plant (Pisum sativum) with the root nodules sliced open to demonstrate the red color conferred by leghemoglobin contained therein. The sliced open rood nodule appears red.
**Figure 3** depicts leghemoglobin isolated from 1 oz of pea roots. The red color commonly attributed to meat is evident in the color photo.

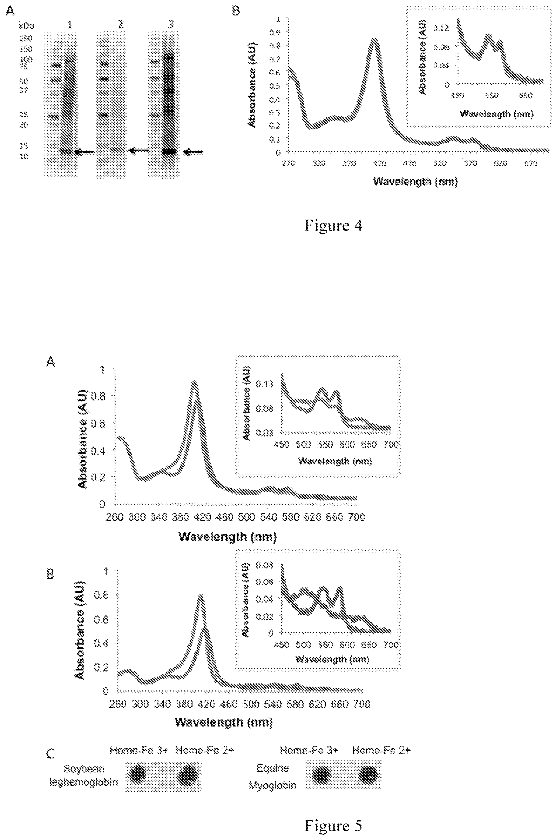

**Figure 4** shows that leghemoglobins from different species are homologs and have similar color properties. In Figure 4, panel A shows an SDS_PAGE gels of lysed root-nodules of three legume plant species (1) Fava bean (2) English Pea (3) Soybean. Arrows mark respective leghemoglobins. Panel B shows the similarity of UV-VIS spectral profile of leghemoglobins from two different plant species (Favabean and Soybean).

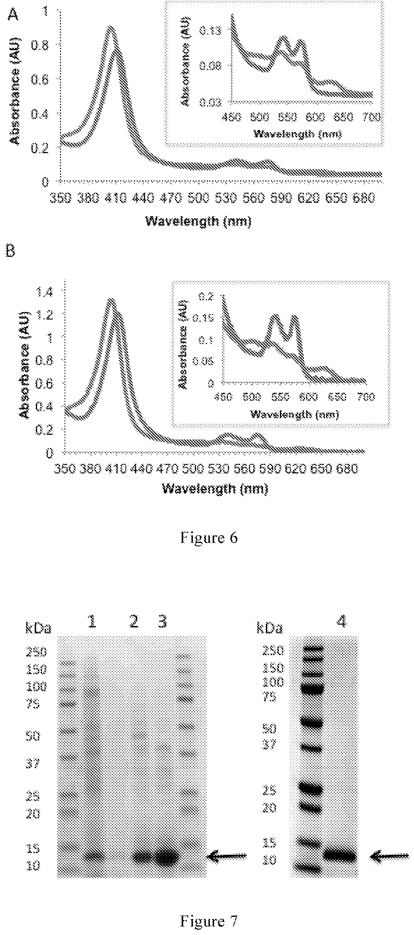

**Figure 5** shows a comparison of reduced (heme iron 2+) and oxidized (heme iron 3+) soybean leghemoglobin (Figure 5 panel A) and equine heart muscle myoglobin (Figure 5 panel B) showing similarity of UV-VIS absorption profiles of two proteins. We purified soybean leghemoglobin from soybean root-nodules using here described protocol. Purified equine myoglobin was purchased from SigmaAldrich. Soybean leghemoglobin (Figure 5 panel A) and equine myoglobin (Figure 5 panel B) were reduced with 1mm sodium hydrosulfite. Shown are UV-VIS absorption spectra of heme Fe3+ (blue line - the higher peak in figures 5 and 6) and heme Fe2+ (red line) of soybean leghemoglobin (Figure 5 panel A) and equine myoglobin (Figure 5 panel B). Insets show a zoom-in of UV-VIS spectra in 450nm to 700nm region. (Figure 5 panel C) Images of 10ul liquid droplet of a 40 mg/ml solution of soybean leghemoglobin in the heme-Fe3+ state (left droplet) showing characteristic rusty red color and a 40mg/ml solution of soybean leghemoglobin solution in the heme-Fe2+ state (right droplet) showing characteristic red color of and (right image) corresponding samples of equine myoglobin.
**Figure 6** depicts examples of successful reduction of leghemoglobin heme iron with sodium hydrosulfite and titanium citrate. In Figure 6 the UV-VIS spectrogram of purified soybean leghemoglobin in which the heme iron is in the oxidized (+3) state is represented by the blue curves in each panel (the blue curves have the higher peaks on the main graphs). The red curves in each panel represent the UV-VIS spectra of the same leghemoglobin species after reduction to the (+2) state (red lines) by addition of (Panel A) 1mM sodium hydrosulfite or (Panel B) 0.24 % (wt/v) titanium citrate in 20mM potassium phosphate pH 7.3, 100mM sodium chloride buffer. The Insets show a zoom-in of UV-VIS spectra in 450 -700 nm region. For this example, leghemoglobin was purified from soybean root nodules using 60/90% ammonium sulfate fractionation and exchanged into 20mM potassium phosphate pH 7.4, 100mM sodium chloride buffer. Sodium hydrosulfite stock solution was prepared by dissolving 100mM sodium hydrosulfite in1 mM sodium hydroxide in water. Titanium citrate stock solution was prepared from 20 % (wt/v) Ti-chloride in hydrochloric acid by mixing it with 0.2M sodium citrate (1:10 v/v). pH was adjusted using sodium carbonate to pH 7.0.
**Figure 7** depicts an example of the leghemoglobin purification flow from soybean root nodules. The figure shows SDS-PAGE fractionation of different soybean leghemoglobin purification steps (Lane 1) Soybean root-nodule lysate; (Lane 2) Soybean root-nodule lysate purified by 60/90 % (wt/v) ammonium sulfate fractionation. Shown is the protein content of 90% ammonium sulfate fractionated protein pellet resuspended in 20mm potassium phosphate pH 7.4, 100mM sodium chloride, 1mM EDTA buffer; Proteins from 90% ammonium sulfate pellet were further purified by anion-exchange chromatography (FFQ GE Healthcare) in 20mM potassium phosphate ph 7.4, 100mM sodium chloride. Leghemoglobin collected in the flowthrough is shown in Lane 3. Anion-exchange flowthrough was fractionated using size-exclusion chromatography (Sephacryl S-100 GE Healthcare) and resulting leghemoglobin fraction is shown in Lane 4. Leghemoglobin content at different purification steps was determined by determining the fraction of leghemoglobin band on SDS-PAGE gel in a respective sample using ImageDoc analysis software (BioRad). Purity (partial abundance) of leghemoglobin at respective steps in the purification steps was: lysate: 32.7% (lane 1), 60/90 % (wt/v) ammonium sulfate fractionation 78% (lane 2), anion-exchange chromatography ~ 83% (lane 3), and size-exclusion chromatography to ~ 95% (lane 4).

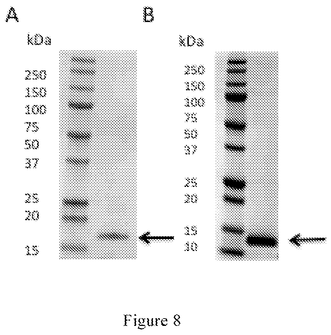

**Figure 8** shows stained SDS-PAGE gel analysis of (A) soybean leghemoglobin expressed and purified using recombinant protein technology and (B) soybean leghemoglobin purified from soybean root nodules. (A) Recombinant Soybean leghemoglobin A carrying His-tag and TEV protease His-tag removal site was expressed in E.coli BL21 strain and purified using His-tag affinity chromatography (Talon resin, CloneTech). The left lane contains molecular weight standards, the right lane contains purified recombinant soybean leghemoglobin A (arrow). Expected molecular weight of the recombinant soybean leghemoglobin A is 17.1kDa. (B) SDS-PAGE gel of purified Soybean leghemoglobin from root nodules. The left lane contains molecular weight standards, the right lane contains purified soybean leghemoglobin A (arrow). Mass spectrometry analysis of purified material determined that all four soybean leghemoglobin isoforms are present, and are full length (data not shown). Expected molecular weights (MW) of soybean leghemoglobin isoforms range from MW15.4 to 15.8kDa.

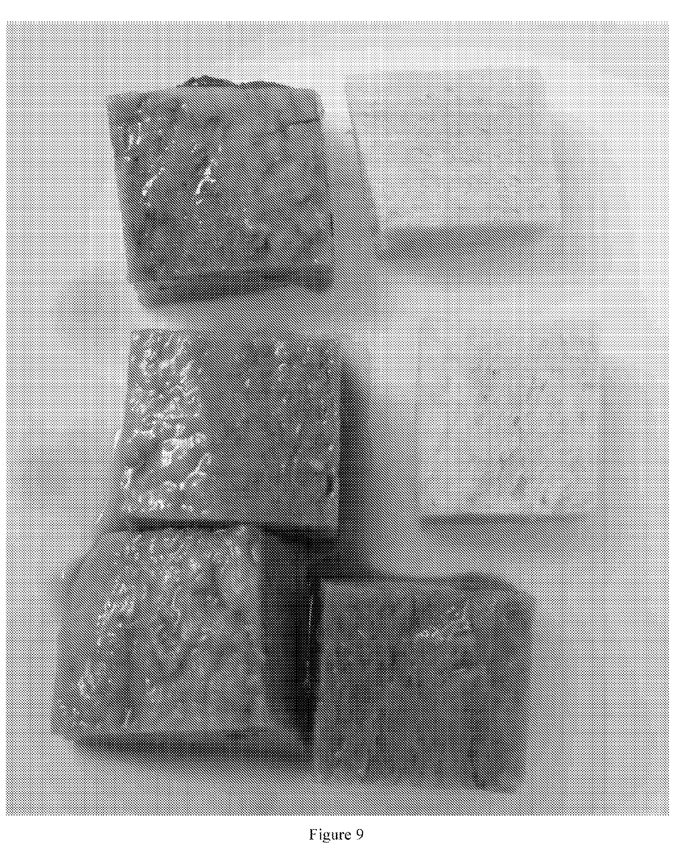

**Figure 9** shows an example of 6 cubes of a commercial meat analog (Quorn chicken analog), about 1cm on a side, 4 of which (Left and lower right) have been soaked in a solution of about 10 mg/ml soybean leghemoglobin in 20 mM Potassium phosphate pH 7.4 and 100 mM NaCl; the remaining two (Upper right) were soaked in the same buffer without leghemoglobin. A deep pink color of the leghemoglobin-infused cubes is apparent in color photos contrasting the pale tan color of the un-infused cubes.

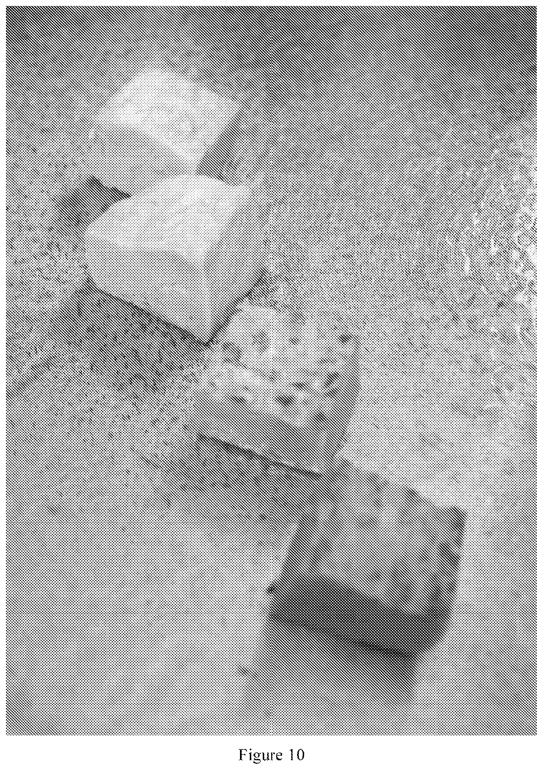

**Figure 10** shows the 4 leghemoglobin-infused cubes of Quorn chicken analog in the process of cooking in a pan at 350°C. The two lower cubes have been turned over to expose the grilled surface, which has turned brown. In the upper two cubes that the heated portion has turned grey-brown, while the cooler top surface retains its pink color. In some embodiments the consumable is injected with a heme containing solution, for instance a leghemoglobin solution, until the consumable is the color of uncooked meat.

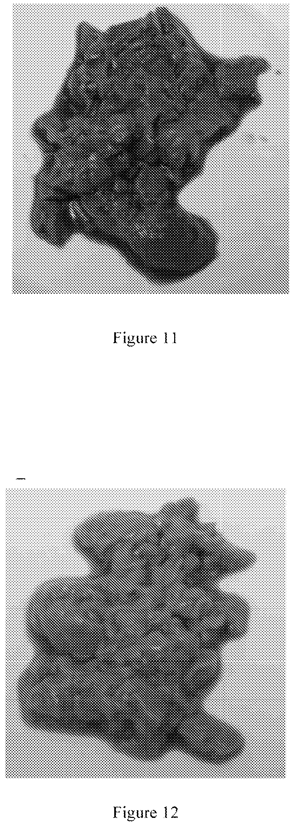

**Figure 11** depicts 43 ml of moong bean protein solution (150 mg/ml in dialysis buffer) were mixed with 37 ml of leghemoglobin solution (46.5 mg/ml leghemoglobin and 20mg/ml of other soybean root nodule protein) in 20 mM potassium phosphate, 100 mM NaCl, pH 7.3). 20 ml of transglutaminase solution (20% w/w) were added, solutions thoroughly mixed, divided into two 50 ml Falcon tubes and incubated overnight at room temperature. Final protein concentrations were 65 mg/ml for moong bean protein, 18 mg/ml of leghemoglobin, 91 mg/ml total protein.
**Figure 12** depicts "White" muscle analog prepared by mixing 43ml moong bean protein solution (150mg/ml) with 45ml of 11.7 mg/ml solution of leghemoglobin and 0.8 % (wt/v) of transglutaminase solution. Final protein concentrations were 63 mg/ml for moong bean protein, 5.2 mg/ml of leghemoglobin, 68 mg/ml total protein.

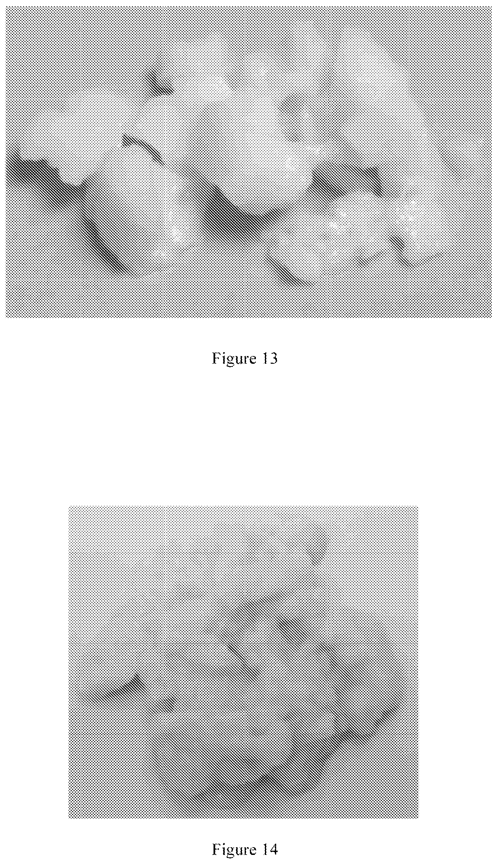

**Figure 13** depicts a fat tissue analog based on moong beans and prepared in eppendorf tubes formed an opaque gel of off-white color, smooth uniform texture, with no visible discernible liquid that was not incorporated into the gel. The gel was freely standing, elastic and springy. The gel has a slight, pleasant aroma and a mild and pleasant flavor. The taste is mildly salty.
**Figure 14** depicts at tissue analog based on pea globulin and prepared in eppendorf tubes very similar to moong bean-based fat analog, except that it gave up a little of oil upon compression.

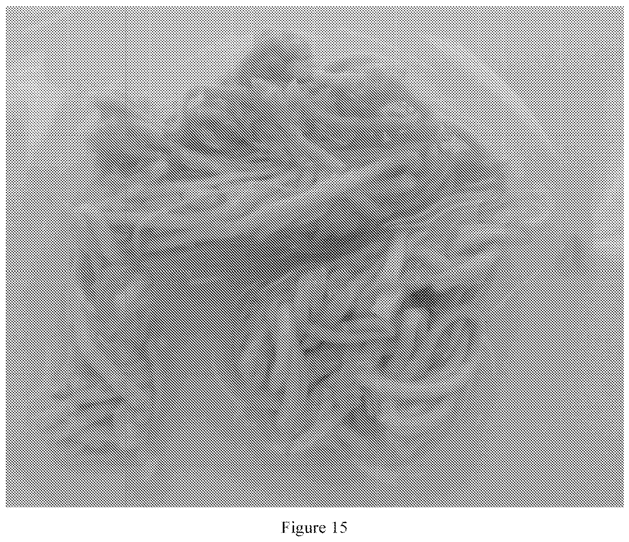

**Figure 15** shows connective-tissue analog strands that were created using a 1:3 ratio in 70% ethanol, loaded into a syringe with a 23 gauge needle (ID 0.337 mm). The solution was slowly extruded from the bottom of a 5 inch-high vessel into an excess of 5 M NaCl solution. The ethanol-zein solution being less dense than the NaCl solution, floated upward, drawing out a fibrous stand of solidifying zein. The NaCl was constantly stirred as the strands began to develop to assist in the strand lengthening. The strands bunch together and become a hard, dense mass.

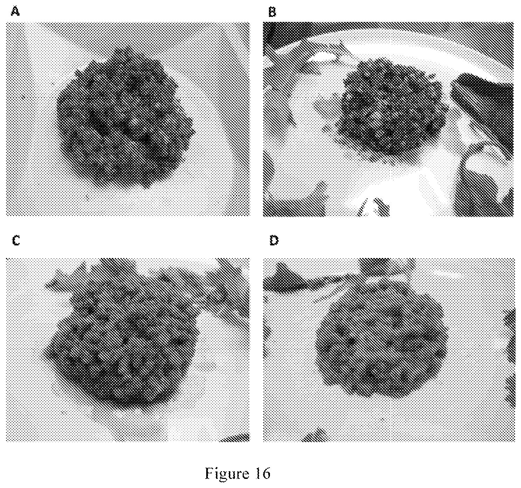

**Figure 16** depicts a ground beef prototype patty was made by combining 62% (wt/wt) muscle analog ( 62% (wt/wt) "dark muscle analog" and 38% (wt/wt) "white muscle analog"), 29% (wt/wt) fat tissue analog (from pea globulin and canola oil), 5% (wt/wt) connective tissue analog (Figure 16 panel A). A ground beef prototype patty was made by combining 62% muscle analog ( 62% "dark muscle analog" and 38% "white muscle analog), 29% fat tissue analog (from moong bean seed 8S protein and rice bran oil), 5% connective tissue analog (Figure 16 panel B). A ground beef prototype patty was made by combining 71 % (wt/wt) muscle tissue analog (composed of 60% "white" muscle analog, 40 % "dark" muscle analog), 23% fat tissue (from pea seed globulin proteins and canola oil) (Figure 16 panel C ). A ground beef prototype patty was made by combining 67% "White" muscle analog, with 28% fat tissue analog (from pea globulins and rice bran oil), (Figure 16, panel D)

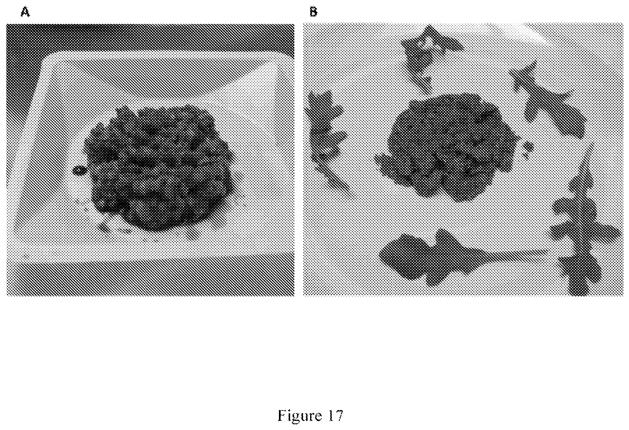

**Figure 17** depicts a ground beef patty analog was made by combining 62% (wt/wt) muscle tissue analog (62% (wt/wt) "dark muscle analog" and 38% (wt/wt) "muscle analog"), 29% (wt/wt) fat tissue analog (from pea globulin and canola oil), 5% (wt/wt) connective tissue analog. The panel on the left shows the patty before cooking and the panel on the right shows the same patty after cooking for about 2 minutes. Observers described the aroma of the cooking ground beef replica as distinctly "beefy".

### DETAILED DESCRIPTION OF THE INVENTION

Methods and compositions for the production of consumables are described herein. The consumables can be for animal consumption. For example the consumable can be food fit for human consumption. The consumable can be approved by suitable regulatory authorities. The consumables can be sold in grocery stores or prepared in restaurants, schools, hospitals, military facilities, prisons, shelters, long-term care facilities, similar to already existing human foods. The consumables could also be food for domestic animals. For instance, dog food could be produced according to the present inventions. The consumables may also be food for wild animals. For instance, the consumables could be provided to non-domesticated predatory animals.

The consumables of the present invention can compete with, supplement or replace animal based foods. For instance the consumables can be meat replicas made entirely from plant sources. The consumables can be made to mimic the cut or appearance of meat as it is currently sold. For instance a consumable may be visually similar to or indistinguishable from ground beef or a particular cut of beef. Alternatively, the consumables can be made with a unique look or appearance. For instance the consumable could contain patterns or lettering that is based upon the structure of the consumable. In some instances the consumables look like traditional meat products after they are prepared. For example a consumable may be produced which is larger than a traditional cut of beef but which, after the consumable is sliced and cooked appears the same as a traditional cooked meet. In some embodiments the consumable may resemble a traditional meat shape in two dimensions, but not in a third. For example the consumable may resemble a cut of meat in two dimensions (for example when viewed from the top), but may be much longer (or thinker) than the traditional cut. So in some embodiments a composition that can be cut repeatedly into traditionally meat shaped products is provided.

The consumable may be made entirely from plant based sources. In some instances the consumable can be made from organic sources. The consumables may also be made from a combination of plant based sources and animal based sources. For instance, the consumable may be a ground beef product supplemented with plant based products of the invention.

The consumables can be made from local products. For instance the consumables can be made from plants grown within a certain radius of the eventual consumer. That radius could be 1, 10, 100, or 1000 miles for example. So, in some embodiments, the invention provides a method for producing a meat replica which does not contain products which have been shipped over 1, 10, 100, or 1000 miles prior to producing the meat replica.

The present invention provides methods for producing consistent properties from the consumables when they are produced from various sources. So, for example, a plant based meat replica produced from local plants in Iowa, USA, will have substantially similar taste, odor, and texture as a plant based meat replica produced from local plants in Lorraine, France. This consistency allows for methods for advertising locally grown foods with consistent properties. The consistency can arise from the concentration or purification of similar components at different locations. These components can be combined in predetermined ratios to insure consistency. In some embodiments a high degree of characteristic consistency is possible using components (e.g. isolated or concentrated proteins and fats) which come from the same plant species. In some embodiments a high degree of characteristic consistency is possible using components (e.g. isolated or concentrated proteins and fats) which come from the different plant species. In some embodiments the same proteins can be isolated from different plant species. In some embodiments the invention provides for a method comprising isolating similar plant constituents from plant sources in different locations, assembling in both locations compositions provided herein, and selling the compositions, wherein the compositions assembled and sold at different the geographic locations have consistent physical and chemical properties. In some embodiments the isolated constituents are from different plant populations in different locations. In some embodiments one or more of the isolated constituents are shipped to the separate geographic locations.

The consumables may require fewer resources to produce than consumables produced from domesticated animals. Accordingly, the present invention provides for meat replicates which require less water or energy to produce than meat. For example a consumable can require less than about 10, 50, 100, 200, 300, 500, or 1000 gallons of water per pound of consumable. For comparison beef can require over 2000 gallons of water per pound of meat.

The consumable may require less land are to produce than a meat product with similar protein content. For example the consumable may require 30% or less of the land area required to produce a meat product with similar protein content.

The consumable may have health benefits compared to an animal product it replaces in the diet. For example it may have less cholesterol or lower levels of saturated fats than comparable meat products.

The consumable may have animal welfare benefits compared to an animal product it replaces in the diet. For instance it may be produced without requiring confinement, forced feeding, premature weaning, disruption of maternal-offspring interactions, or slaughter of animals for their meat.

The consumable may have a smaller "carbon footprint" than the meat products they replace. For example the consumable may result in net greenhouse gas emissions of 1%, 5%, 10%, 25%, 50% or 75% of the greenhouse gas emissions attributable to the animal product it replaces.

The consumable may provide alternatives to animal products or combinations of animal products whose consumption is forbidden by religious beliefs. For example, the consumable may be a kosher pork chop.

The consumable can also be shipped in components and produced or assembled at a different location. When available local components can be used for production of the consumable. These can be supplemented with components which are not locally available. This allows for methods of producing consumables, for instance meat replicates, using less energy in shipment than is required for meat. For example, local water can be used in combination with a kit which provides other components of the consumable. Using local water will reduce shipping weight thereby reducing cost and environmental impact.

The consumables can be produced or assembled wholly or in part in areas where animal farming is not practical or is not allowed. The consumable can be produced or assembled within an urban environment. For example a kit may be provided to a user to enable the user to produce the consumable. The user could use local water or use plants from a rooftop garden, for instance in Shanghai. In another example, the consumables could be produced aboard a space craft, space station, or lunar base. Accordingly, the present invention provides methods and systems for the production of meat replicas for use in space travel or for training for the same. For instance the present invention could be used in earth based training for space travel. The consumables could also be produced on an island or upon a manmade platform at sea where the keeping of livestock is difficult or prohibited.

The consumables are, in some embodiments, designed to replicate the experience of eating meat. The look, texture, and taste of the consumable can be such that it is similar or indistinguishable from meat. The invention therefore provides in certain embodiments methods for determining whether an animal or human can distinguish the consumable from meat.

One method to determine whether the consumable is comparable to meat is to a) define the properties of meat and b) determine whether the consumable has similar properties. Properties of meat that can be tested include mechanical properties such as hardness, cohesiveness, brittleness, chewiness, gumminess, viscosity, elasticity, and adhesiveness. Properties of meat that can be tested also include geometric properties such as particle size and shape, and particle shape and orientation. Additional properties can include moisture content and fat content. These properties can be described using terms such as "soft," "firm" or "hard" describe hardness; "crumbly," "crunchy," "brittle," "chewy," "tender," "tough," "short," "mealy," "pasty," or "gummy," to describe cohesiveness; "thin" or "viscous" to describe viscosity; "plastic" or "elastic" to describe elasticity; "sticky," "tacky" or "gooey" to describe adhesiveness; "gritty," "grainy" or "course" to describe particle shape and size; "fibrous," "cellular" or "crystalline" to describe particle shape and orientation, "dry," "moist," "wet," or "watery" to describe moisture content; or "oily" or "greasy" to describe fat content. So, in one embodiment a group of people can be asked to rate a certain meat, for instance ground beef, according to properties which describe the meat. These ratings can be used as an indication of the properties of the meat. The consumables of the present invention can then be compared to the meat to determine how similar the consumable is to the meat. In some instances the properties of the consumables are then altered to make the consumable more similar to the meat. So, in some embodiments, the consumable is rated similar to meat according to human evaluation. In some embodiments the consumable is indistinguishable from real meat to a human.

In some embodiments, subjects asked to identify the consumable identify it as a form of meat. In some embodiments one property of the compositions of the invention is that an animal, for example a human, will identify the composition as a meat. In some embodiments the human identifies the composition of the invention as having properties equivalent to meat. In some embodiments one or more properties of meat are equivalent according to a human's perception. Such properties include the properties that can be tested. In some embodiments a human identifies a consumable of the present invention as more meat like than meat substitutes found in the art.

In embodiments an experiment can demonstrate that consumable s acceptable to consumers. A panel can be used to screen a variety of consumables described herein. A number of human panelists can tested multiple consumable samples, namely, natural meats vs. the consumable compositions described herein. Variables such as fat content can be standardized for example to 20% fat using lean and fat meat mixes. Fat content can be determined using the Babcock for meat method (S. S. Nielson, Introduction to the Chemical Analysis of Foods (Jones & Bartlett Publishers, Boston, 1994)). Mixtures of ground beef and consumables of the invention prepared according to the procedure described herein can be formulated.

Panelists can be served samples in booths, under red lights or under white light, in an open consumer panel. Samples can be assigned random three-digit numbers and rotated in ballot position to prevent bias. Panelists can be asked to evaluate samples for tenderness, juiciness, texture, flavor, and overall acceptability using a hedonic scale from 1=dislike extremely, to 9=like extremely, with a median of 5=neither like nor, dislike. Panelists can be encouraged to rinse their mouths with water between samples, and given opportunity to comment on each sample.

The results of this experiment can indicate significant differences (p<0.05) or similarities between the traditional meats and the compositions of the invention.

These results will demonstrate that the compositions of the invention are judged as acceptably equivalent to real meat products. Additionally these results can demonstrate that compositions of the invention are preferred by panelist over other commercially available meat substitutes. So, in some embodiments the present invention provides for consumables that are significantly similar to traditional meats.

Consumables of the invention can also have similar physical characteristics as traditional meat. In one embodiment the force required to pierce a 1 inch thick structure (e.g. a patty) made of a consumable of the invention with a fixed diameter steel rod is not significantly different than the force required to pierce a 1 inch thick similar meat structure (e.g. a ground beef patty) with a similar fixed diameter steel rod. Accordingly, the invention provides for consumables with similar physical strength characteristics to meat.

In some embodiments composition of the invention have a similar cook loss characteristic as meat. In one embodiment a consumable of the invention with a similar fat and protein content as ground beef has the same reduction in size when cooked as real ground beef. Similar similaritics in size loss profiles can be achieved for various compositions of consumables described herein matched to various meats.

In some embodiments the consumable is compared to real meat based upon olfactometer readings. In various embodiments the olfactometer can be used to assess odor concentration and odor thresholds, odor suprathresholds with comparison to a reference gas, hedonic scale scores to determine the degree of appreciation, or relative intensity of odors. In some embodiments the olfactometer allows the training and automatic evaluation of expert panels. So in some embodiments the consumable is a product that causes similar or identical olfactometer readings. In some embodiments the similarity is sufficient to be beyond the detection threshold of human perception.

Gas chromatography-mass spectrometry (GCMS) is a method that combines the features of gas-liquid chromatography and mass spectrometry to separate and identify different substances within a test sample. GCMS can, in some embodiments, be used to evaluate the properties of a consumable. For example volatile chemicals can be isolated from the head space around meat. These chemicals can be identified using GCMS. A profile of the volatile chemicals in the headspace around meat is thereby created. In some instances each peak of the GCMS can be further evaluated. For instance, a human could rate the experience of smelling the chemical responsible for a certain peak. This information could be used to further refine the profile. GCMS could then be used to evaluate the properties of the consumable. The GCMS profile could be used to refine the consumable.

Characteristic flavor and fragrance components are mostly produced during the cooking process by chemical reactions molecules including amino acids, fats and sugars which are found in plants as well as meat. Therefore in some embodiments the consumable is tested for similarity to meat during or after cooking. In some embodiments human ratings, human evaluation, olfactometer readings, or GCMS measurements, or combinations thereof, are used to create an olfactory map of cooked meat. Similarly, an olfactory map of the consumable, for instance a meat replica, can be created. These maps can be compared to assess how similar the cooked consumable it so meat. In some embodiments the olfactory map of the consumable during or after cooking is similar to or indistinguishable from that of cooked or cooking meat. In some embodiments the similarity is sufficient to be beyond the detection threshold of human perception.

In one aspect, the invention provides a meat substitute product (alternatively referred to herein as "consumable") that is substantially or entirely composed of ingredients derived from non-animal sources, yet recapitulates key features associated with the cooking and consumption of an equivalent meat product derived from animals. The equivalent meat product can be a white meat or a dark meat. The equivalent meat product can be derived from any animal. Non-limiting examples of animals used to derive the equivalent meat product include farmed animals such as, e.g., cattle, sheep, pig, chicken, turkey, goose, duck, horse, dog or game animals (whether wild or farmed) such as, e.g., rabbit, deer, bison, buffalo, boar, snake, pheasant, quail, bear, elk, antelope, pigeon, dove, grouse, fox, wild pig, goat, kangaroo, emu, alligator, crocodile, turtle, groundhog, marmot, possum, partridge, squirrel, raccoon, whale, scal, ostrich, capybara, nutria, guinea pig, rat, mice, vole, any variety of insect or other arthropod, seafood such as, e.g, fish, crab, lobster, oyster, muscle, scallop, abalone, squid, octopus, sea urchin, tunicate and others. Many meat products are typically derived from skeletal muscle of an animal but it is understood that meat can also come from other muscles or organs of the animal. In some embodiments, the equivalent meat product is a cut of meat derived from skeletal muscle. In other embodiments, the equivalent meat product is an organ such as, e.g., a kidney, heart, liver, gallbladder, intestine, stomach, bone marrow, brain, thymus, lung, tongue. Accordingly, in some embodiments the compositions of the present invention are consumables similar to skeletal muscle or organs.

In some aspects, the present invention provides meat substitute products comprising one or more of a first composition comprising a muscle tissue replica, a second composition comprising an adipose tissue replica, and/or a third composition comprising a connective tissue replica, wherein the one or more compositions are combined in a manner that recapitulates the physical organization of meat. In other aspects, the present invention provides compositions for a muscle tissue replica (herein referred to as "muscle replica"), an adipose tissue replica (herein referred to as "fat replica"), and a connective tissue replica (herein referred to as "connective tissue replica"). In some embodiments, the compositions and meat substitute products are principally or entirely composed of ingredients derived from non-animal sources. In alternative embodiments, the muscle, fat, and/or connective tissue replica, or the meat substitute products comprising one or more of said replicas, are partially derived from animal sources but supplemented with ingredients derived from non-animal sources. In yet other alternative embodiments, the invention provides meat products substantially derived from animal sources but which are supplemented with one or more of a muscle tissue replica, a fat replica, and/or a connective tissue replica, wherein said replicas are derived substantially or entirely from non-animal sources. A non-limiting example of such a meat product is an ultra-lean ground beef product supplemented with a non-animal derived fat replica which improves texture and mouthfeel while preserving the health benefits of a consumable low in animal fat. Such alternative embodiments result in products with properties that more closely recapitulate key features associated with preparing and consuming meat but which are less costly and associated with a lesser environmental impact, less animal welfare impact, or improved health benefits for the consumer.

The physical organization of the meat substitute product can be manipulated by controlling the localization, organization, assembly, or orientation of the muscle, fat, and/or connective tissue replicas described herein. In some embodiments the product is designed in such a way that the replicas described herein are associated with one another as in meat. In some embodiments the consumable is designed so that after cooking the replicas described herein are associated with one another as in cooked meat. In some embodiments, one or more of the muscle, fat, and/or connective tissue replicas are combined in a manner that recapitulate the physical organization of different cuts or preparations of meat. In an example embodiment, the replicas are combined in a manner that approximates the physical organization of natural ground meat. In other embodiments, the replicas are combined in a manner that approximates different cuts of beef, such as, e.g., ribeye, filet mignon, London broil, among others.

### PROTEINS AND PROTEIN SOURCES

In some embodiments, any of the meat substitute products, muscle tissue replica, fat replica, or connective tissue replica, comprise one or more isolated, purified proteins. In some embodiments, the meat substitute products are comprised of one or more of a muscle replica, a fat replica, and/or connective tissue replica which comprise one or more isolated, purified proteins. In other embodiments, the muscle replica, fat replica, and/or connective tissue replica comprises one or more isolated, purified proteins. In some embodiments, about 0.1%,, 0.2%, 0.5%, 1%, 2%, 3%, 4%, 5%, 6%, 7%, 8%, 9%, 10%, 15%, 20%, 25%, 30%, 35%, 40%, 45%, 50%, 55%, 60%, 65%, 70%, 75%, 80%, 85%, 90%, 95%, 99% or more of the protein component is comprised of one or more isolated, purified proteins. For the purposes of this document, "purified protein" will refer to a preparation in which the cumulative abundance by mass of protein components other than the specified protein, which can be a single monomeric or multimeric protein species, is reduced by a factor of 2 or more, 3 or more, 5 or more, 10 or more, 20 or more, 50 or more, 100 or more or 1000 or more relative to the source material from which the specified protein was isolated.

In some embodiments, the one or more isolated, purified proteins are derived from non-animal sources. Non-limiting examples of non-animal sources include plants, funghi, bacteria, archaea, genetically modified organisms such as genetically modified bacteria or yeast, chemical or in vitro synthesis. In particular embodiments, the one or more isolated, purified proteins are derived from plant sources. Non-limiting examples of plant sources include grains such as, e.g., corn, maize, rice, wheat, barley, rye, triticale, teff, oilseeds including cottonseed, sunflower seed, safflower seed, rapeseed, leafy greens such as, e.g., lettuce, spinach, kale, collard greens, turnip greens, chard, mustard greens, dandelion greens, broccoli, cabbage, green matter not ordinarily consumed by humans, including biomass crops, including switchgrass, miscanthus, sorghum, other grasses, alfalfa, corn stover, green matter ordinarily discarded from harvested plants, sugar cane leaves, leaves of trees, root crops such as cassava, sweet potato, potato, carrots, beets, turnips, plants from the legume family, such as, e.g., clover, peas such as cowpeas, english peas, yellow peas, green peas, beans such as, e.g., soybeans, fava beans, lima beans, kidney beans, garbanzo beans, mung beans, pinto beans, lentils, lupins, mesquite, carob, soy, and peanuts, vetch (vicia), stylo (stylosanthes), arachis, indigofera, acacia, leucaena, cyamopsis, and sesbania. One of skill in the art will understand that proteins that can be isolated from any organism in the plant kingdom may be used in the present invention.

Proteins that are abundant in plants can be isolated in large quantities from one or more source plants and thus are an economical choice for use in any of the muscle, fat, connective tissue replicas, or meat substitute products. Accordingly, in some embodiments, the one or more isolated proteins comprises an abundant protein found in high levels in a plant and capable of being isolated and purified in large quantities. In some embodiments, the abundant protein comprises about 0.5%, 1%, 2%, 3%, 4%, 5%, 6%, 7%, 8%, 9%, 10%, 15%, 20%, 25%, 30%, 35%, 40%, 45%, 50%, 55%, 60%, 65%, 70% of the total protein content of the source plant. In some embodiments, the abundant protein comprises about 0.5-10%, about 5-40%, about 10-50%, about 20-60%, or about 30-70% of the total protein content of the source plant. In some embodiments, the abundant protein comprises about 0.5%, 1%, 2%, 3%, 4%, 5%, 6%, 7%, 8%, 9%, 10%, 15%, 20%, 25%, 30%, 35%, 40%, 45%, 50% of the total weight of the dry matter of the source plant. In some embodiments, the abundant protein comprises about 0.5-5%, about 1-10%, about 5-20%, about 10-30%, about 15-40%, about 20-50% of the total weight of the dry matter of the source plant.

In particular embodiments, the one or more isolated proteins comprises an abundant protein that is found in high levels in the leaves of plants. In some embodiments, the abundant protein comprises about 0.5%, 1%, 2%, 3%, 4%, 5%, 6%, 7%, 8%, 9%, 10%, 15%, 20%, 25%, 30%, 35%, 40%, 45%, 50%, 55%, 60%, 65%, 70%, 75%, 80% of the total protein content of the leaves of the source plant. In some embodiments, the abundant protein comprises about 0.5-10%, about 5%-40%, about 10%-60%, about 20%-60%, or about 30-70% of the total protein content of the leaves of the source plant. In particular embodiments, the one or more isolated proteins comprise ribulose-1,5-bisphosphate carboxylase oxygenase (rubisco activase). Rubisco is a particularly useful protein for meat replicas because of its high solubility and an amino acid composition with close to the optimum proportions of essential amino acids for human nutrition. In particular embodiments, the one or more isolated proteins comprise ribulose-1,5-bisphosphate carboxylase oxygenase activase (rubisco activase). In particular embodiments, the one or more isolated proteins comprise a vegetative storage protein (VSP).

In some embodiments, the one or more isolated proteins includes an abundant protein that is found in high levels in the seeds of plants. In some embodiments, the abundant protein comprises about 0.5%, 1%, 2%, 3%, 4%, 5%, 6%, 7%, 8%, 9%, 10%, 15%, 20%, 25%, 30%, 35%, 40%, 45%, 50%, 55%, 60%, 65%, 70%, 75%, 80%, 85% or 90% or more of the total protein content of the seeds of the source plant. In some embodiments, the abundant protein comprises about 0.5-10%, about 5%-40%, about 10%-60%, about 20%-60%, or about 30-70% or >70% of the total protein content of the seeds of the source plant. Non-limiting examples of proteins found in high levels in the seeds of plants are seed storage proteins, e.g., albumins, glycinins, conglycinins, globulins, vicilins, conalbumin, gliadin, glutelin, gluten, glutenin, hordein, prolamin, phaseolin (protein), proteinoplast, secalin, triticeae gluten, zein, any seed storage protein, oleosins, caloleosins, steroleosins or other oil body proteins

In some embodiments, the one or more isolated proteins includes proteins that interact with lipids and help stabilize lipids in a structure. Without wishing to be bound by a particular theory, such proteins may improve the integration of lipids and/or fat replicas with other components of the meat substitute product, resulting in improved mouthfeel and texture of the final product. A non-limiting example of a lipid-interacting plant protein is the oleosin family of proteins. Oleosins are lipid-interacting proteins that are found in oil bodies of plants. Other non-limiting examples of plant proteins that can stabilize emulsions include seed storage proteins from Great Northern Beans, albumins from peas, globulins from peas, 8S globulins from Moong bean, 8S globulins from Kidney bean.

### MUSCLE REPLICAS

A large number of meat products comprise a high proportion of skeletal muscle. Accordingly, the present invention provides a composition derived from non-animal sources which replicates or approximates key features of animal skeletal muscle. In another aspect, the present invention provides a meat substitute product that comprises a composition derived from non-animal sources which replicates or approximates animal skeletal muscle. Such a composition will be labeled herein as "muscle replica". In some embodiments, the muscle replica and/or meat substitute product comprising the muscle replica are partially derived from animal sources. In some embodiments, the muscle replica and/or meat substitute product comprising the muscle replica are entirely derived from non-animal sources.

Many meat products comprise a high proportion of striated skeletal muscle in which individual muscle fibers are organized mainly in an isotropic fashion. Accordingly, in some embodiments the muscle replica comprises fibers that are to some extent organized isotropically. In some embodiments the fibers comprise a protein component. In some embodiments, the fibers comprise about 1%, about 2%, about 5%, about 10%, about 15%, about 20%, about 30%, about 40%, about 50%, about 60%, about 70%, about 80%, about 90%, about 95%, about 99% or more of a protein component.

In some embodiments, the protein component comprises one or more isolated, purified proteins. For example the one or more isolated, purified protein can comprise the 8S globulin from Moong bean seeds, or the albumin or globulin fraction of pea seeds. These proteins provide examples of proteins with favorable properties for constructing meat replicas because of their ability to form gels with textures similar to animal muscle or fat tissue. Examples and embodiments of the one or more isolated, purified proteins are described herein. The list of potential candidates here is essentially open and may include Rubisco, any major seed storage proteins, proteins isolated from fungi, bacteria, archaea, viruses, or genetically engineered microorganisms, or synthesized in vitro. The proteins may be artificially designed to emulate physical properties of animal muscle tissue. The proteins may be artificially designed to emulate physical properties of animal muscle tissue. In some embodiments, one or more isolated, purified proteins accounts for about 0.1%, 0.2%, 0.5%, 1%, 2%, 3%, 4%, 5%, 6%, 7%, 8%, 9%, 10%, 15%, 20%, 25%, 30%, 35%, 40%, 45%, 50%, 55%, 60%, 65%, 70%, 75%, 80%, 85%, 90%, 95%, 99% or more of the protein component by weight.

Skeletal muscle of animals such as beef cattle typically contain substantial quantities of glycogen, which can comprise on the order of 1% of the mass of the muscle tissue at the time of slaughter. After slaughter, a fraction of this glycogen continues to be metabolized yielding products including lactic acid, which contributes to lowering the pH of the muscle tissue, a desirable quality in meat. Glycogen is a branched polymer of glucose linked together by alpha (1->4) glycosidic bonds in linear chains, with branch points comprising alpha (1->6) glycosidic bonds. Starches from plants, particularly amylopectins are also branched polymers of glucose linked together by alpha (1->4) glycosidic bonds in linear chains, with branch points comprising alpha (1->6) glycosidic bonds and can therefore be used as an analog of glycogen in constructing meat replicas. Thus in some embodiments, the muscle or meat replica includes a starch or pectin.

Additional components of animal muscle tissue include sodium, potassium, calcium, magnesium, other metal ions, lactic acid, other organic acids, free amino acids, peptides, nucleotides and sulfur compounds. Thus in some embodiments, the muscle replica can include sodium, potassium, calcium, magnesium, other metal ions, lactic acid, other organic acids, free amino acids, peptides, nucleotides and sulfur compounds. In some embodiments the concentration of sodium, potassium, calcium, magnesium, other metal ions, lactic acid, other organic acids, free amino acids, peptides, nucleotides and/or sulfur compounds in the muscle replica or consumable are within 10% of the concentrations found in a muscle or meat being replicated.

In another aspect, the invention provides methods for making a muscle replica. In some embodiments, the composition is formed into asymmetric fibers prior to incorporation into the consumable. In some embodiments these fibers replicate muscle fibers. In some embodiments the fibers are spun fibers. In other embodiments the fibers are extruded fibers. Accordingly, the present invention provides for methods for producing asymmetric or spun protein fibers. In some embodiments, the fibers are formed by extrusion of the protein component through an extruder. Methods of extrusion are well known in the art, and are described in US6379738, US3693533, US20120093994, which are herein incorporated by reference.

In some embodiments extrusion can be conducted using an MPF19 twin-screw extruder (APV Baker, Grand Rapids, Mich.) with a cooling die. The cooling die can cool the extrudate prior to return of the extrudate to atmospheric pressure, thus substantially inhibiting expansion or puffing of the final product. In the MPF19 apparatus, dry feed and liquid can be added separately and mixed in the barrel. Extrusion parameters can be, for example: screw speed of 200 rpm, product temperature at the die of 150 C., feed rate of 23 g/min, and water-flow rate of 11 g/min. Product temperature can be measured during extrusion by a thermocouple at the end of the extrusion barrel. Observations can be made on color, opacity, structure, and texture for each collected sample. Collected samples can be optionally dried at room temperature overnight, then ground to a fine powder (<60 mesh) using a Braun food grinder. The pH of samples can be measured in duplicate using 10% (w/v) slurries of powdered sample in distilled water.

### FAT REPLICA

Animal fat is important for the experience of eating cooked meat. Accordingly, the present invention provides a composition derived from non-animal sources which recapitulates key features of animal fat. In another aspect, the present invention provides a meat substitute product that comprises a composition derived from non-animal sources which recapitulates animal fat. Such a composition will be labeled herein as a "fat replica". In some embodiments, the fat replica and/or meat substitute product comprising the fat replica are partially derived from animal sources.

In some embodiments the meat substitute product has a fat component. In some embodiments the fat content of the consumable is 1%, 5%, 10%, 15%, 20%, 25%, 30%, 35%, 40%, 45%, 50%, 55%, or 60% fat. In some embodiments, the fat replica comprises a gel with droplets of fat suspended therein. In some embodiments, the gel is a soft, elastic gel comprising proteins and optionally carbohydrates. In particular embodiments, the proteins used in the gel are plant or microbial proteins. In some embodiments, the proteins used in the fat replica might include Rubisco, any major seed storage proteins, proteins isolated from fungi, bacteria, archaea, viruses, or genetically engineered microorganisms, or synthesized in vitro. The proteins may be artificially designed to emulate physical properties of animal fat. The proteins may be artificially designed to emulate physical properties of animal fat.

The fat droplets used in some embodiments of the present invention can be from a variety of sources. In some embodiments, the sources are non-animal sources. In particular embodiments, the sources are plant sources. Non-limiting examples of oils include corn oil, olive oil, soy oil, peanut oil, walnut oil, almond oil, sesame oil, cottonseed oil, rapeseed oil, canola oil, safflower oil, sunflower oil, flax seed oil, algal oil, palm oil, palm kernel oil, coconut oil, babassu oil, shea butter, mango butter, cocoa butter, wheat germ oil, rice bran oil, oils produced by bacteria, algae, archaea or fungi or genetically engineered bacteria, algae, archaea or fungi, triglycerides, monoglycerides, diglycerides, sphingosides, glycolipids, lecithin, lysolecithin, phophatidic acids, lysophosphatidic acids, oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, conjugated oleic acid, or esters of: oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or glycerol esters of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or triglyceride derivatives of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid.

In some embodiments, fat droplets are derived from pulp or seed oil. In other embodiments, the source may be yeast or mold. For instance, in one embodiment the fat droplets comprise triglycerides derived from *Mortierella isabellina.*

In some embodiments plant oils are modified to resemble animal fats. The plant oils can be modified with flavoring or other agents to recapitulate the taste and smell of meat during and after cooking. Accordingly, some aspects of the invention involve methods for testing the qualitative similarity between the cooking properties of animal fat and the cooking properties of plant oils in the consumable.

In some embodiments, the fat replica comprises a protein component comprising one or more isolated, purified proteins. The purified proteins contribute to the taste and texture of the meat replica. In some embodiments purified proteins can stabilize emulsified fats. In some embodiments the purified proteins can form gels upon denaturation or enzymatic crosslinking, which replicate the appearance and texture of animal fat. Examples and embodiments of the one or more isolated, purified proteins are described herein. In particular embodiments, the one or more isolated proteins comprise a protein isolated from the legume family of plants. Non-limiting examples of legume plants are described herein, although variations with other legumes are possible. In some embodiments, the legume plant is a pea plant. In some embodiments the isolated purified proteins stabilize emulsions. In some embodiments the isolated purified proteins form gels upon crosslinking or enzymatic crosslinking. In some embodiments, the isolated, purified proteins comprise seed storage proteins. In some embodiments, the isolated, purified proteins comprise albumin. In some embodiments, the isolated, purified proteins comprise globulin. In a particular embodiment, the isolated, purified protein is a purified pea albumin protein. In another particular embodiment, the isolated, purified protein is a purified pea globulin protein. In another particular embodiment the isolate purified protein is a Moong bean 8S globulin. In another particular embodiment, the isolated, purified protein is an oleosin. In another particular embodiment, the isolated, purified protein is a caloleosin. In another particular embodiment, the isolated, purified protein is Rubisco. In some embodiments, the protein component comprises about 0.1%, 0.5%, 1%, 2%, 5%, 10%, 15%, 20%, 25%, 30%, 35%, 40%, 45%, 50%, 55%, 60%, 65%, 70%, 75%, 80%, 85%, 90% or more of the fat replica by dry weight or total weight. In some embodiments, the protein component comprises about 0.1-5%, about 0.5-10%, about 1-20%, about 5-30%, about 10-50%, about 20-70%, or about 30-90% or more of the fat replica by dry weight or total weight. In some embodiments, the protein component comprises a solution containing one or more isolated, purified proteins.

In some embodiments, the fat replica comprises cross-linking enzymes that catalyze reactions leading to covalent crosslinks between proteins. Cross-linking enzymes can be used to create or stabilize the desired structure and texture of the adipose tissue replica, to mimic the desired texture of an equivalent desired animal fat. Non-limiting examples of cross-linking enzymes include, e.g., transglutaminase, lysyl oxidases, or other amine oxidases (e.g. Pichia pastoris lysyl oxidase). In some embodiments, the cross-linking enzymes are isolated and purified from a non-animal source, examples and embodiments of which are described herein. In some embodiments, the fat replica comprises at least 0.0001%, or at least 0.001%, or at least 0.01%, or at least 0.1%, or at least1% (wt/vol) of a cross-linking enzyme . In particular embodiments, the cross-linking enzyme is transglutaminase.

In another aspect, the invention provides methods for making a fat replica. In some embodiments, the fat droplets are suspended in a gel. In some embodiments the present invention provides for methods for producing droplets of fat suspended in the gel. The fat can isolated and homogenized. For example an organic solvent mixture can be used to help mix a lipid. The solvent can then be removed. At this point the lipid can be frozen, lyophilized, or stored. So in some aspects the invention provides for a method for isolating and storing a lipid which has been selected to have characteristics similar to animal fat. The lipid film or cake can then be hydrated. The hydration can utilize agitation or temperature changes. The hydration can occur in a precursor solution to a gel. After hydration the lipid suspension can be sonicated or extruded to further alter the properties of the lipid in the solution.

In some embodiments, the fat replica is assembled to approximate the organization adipose tissue in meat. In some embodiments some or all of the components of the fat replica are suspended in a gel. In various embodiments the gel can be a proteinaceous gel, a hydrogel, an organogel, or a a xerogel. In some embodiments, the gel can be thickened to a desired consistency using an agent based on polysaccharides or proteins. For example fecula, arrowroot, cornstarch, katakuri starch, potato starch, sago, tapioca, alginin, guar gum, locust bean gum, xanthan gum, collagen, egg whites, furcellaran, gelatin, agar, carrageenan, cellulose, methylcellulose, hydroxymethylcellulose, acadia gum, konjac, starch, pectin, amylopectin or proteins derived from legumes, grains, nuts, other seeds, leaves, algae, bacteria, of fungi can be used alone or in combination to thicken the gel, forming an architecture or structure for the consumable.

In particular embodiments, the fat replica is an emulsion comprising a solution of one or more proteins and one or more fats suspended therein as droplets. In some embodiments, the emulsion is stabilized by one or more cross-linking enzymes into a gel. In more particular embodiments, the one or more proteins in solution are isolated, purified proteins. In yet more particular embodiments, the isolated, purified proteins comprise a purified pea albumin enriched fraction. In other more particular embodiments, the isolated, purified proteins comprise a purified pea globulin enriched fraction. In other more particular embodiments, the isolated, purified proteins comprise a purified Moong bean 8S globulin enriched fraction. In yet more particular embodiments, the isolated, purified proteins comprise a Rubisco enriched fraction. In other particular embodiments, the one or more fats are derived from plant-based oils. In more particular embodiments, the one or more fats are derived from one or more of: corn oil, olive oil, soy oil, peanut oil, walnut oil, almond oil, sesame oil, cottonseed oil, rapeseed oil, canola oil, safflower oil, sunflower oil, flax seed oil, algal oil, palm oil, palm kernel oil, coconut oil, babassu oil, shea butter, mango butter, cocoa butter, wheat germ oil, rice bran oil, oils produced by bacteria, algae, archaea or fungi or genetically engineered bacteria, algae, archaea or fungi, triglycerides, monoglycerides, diglycerides, sphingosides, glycolipids, lecithin, lysolecithin, phophatidic acids, lysophosphatidic acids, oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, conjugated oleic acid, or esters of: oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or glycerol esters of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or triglyceride derivatives of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid. In yet even more particular embodiments, the one or more fats is a rice bran oil. In another particular embodiment, the one or more fats is a canola oil. In other particular embodiments, the cross-linking enzyme is transglutaminase, lysyl oxidase, or other amine oxidase. In yet even more particular embodiments, the cross-linking enzyme is transglutaminase. In particular embodiments, the fat replica is a high fat emulsion comprising a protein solution of purified pea albumin emulsified with 40-80% rice bran oil, stabilized with 0.5-5% (wt/vol) transglutaminase into a gel. In particular embodiments, the fat replica is a high fat emulsion comprising a protein solution of partially-purified moong bean 8S globulin emulsified with 40-80% rice bran oil, stabilized with 0.5-5% (wt/vol) transglutaminase into a gel. In particular embodiments, the fat replica is a high fat emulsion comprising a protein solution of partially-purified moong bean 8S globulin emulsified with 40-80% canola oil, stabilized with 0.5-5% (wt/vol) transglutaminase into a gel. In particular embodiments, the fat replica is a high fat emulsion comprising a protein solution of purified pea albumin emulsified with 40-80% rice bran oil, stabilized with 0.0001-1% (wt/vol) transglutaminase into a gel. In particular embodiments, the fat replica is a high fat emulsion comprising a protein solution of partially-purified moong bean 8S globulin emulsified with 40-80% rice bran oil, stabilized with 0.0001-1% (wt/vol) transglutaminase into a gel. In particular embodiments, the fat replica is a high fat emulsion comprising a protein solution of partially-purified moong bean 8S globulin emulsified with 40-80% canola oil, stabilized with 0.0001-1% (wt/vol) transglutaminase into a gel.

### CONNECTIVE TISSUE REPLICA

Animal connective tissue provides key textural features that are an important component of the experience of eating meat. Accordingly, the present invention provides a composition derived from non-animal sources which recapitulates key features of animal connective tissue. In another aspect, the present invention provides a meat substitute product that comprises a composition derived from non-animal sources which recapitulates important textural and visual features of animal connective tissue. Such a composition will be labeled herein as "connective tissue replica". In some embodiments, the connective tissue replica and/or meat substitute product comprising the connective tissue replica are partially derived from animal sources.

Animal connective tissue can generally be divided into fascia-type and cartilage-type tissue. Fascia-type tissue is highly fibrous, resistant against extension (has high elastic modulus), and has a high protein content, a moderate water content (ca. 50%), and low-to-none fat and polysaccharide content. Accordingly, the present invention provides a connective tissue replica that recapitulates key features of fascia type tissue. In some embodiments, the connective tissue replica comprises about 50% protein by total weight, about 50% by liquid weight, and has a low fat and polysaccharide component.

The protein content of most fascia-type connective tissue is comprised mainly of collagen. Collagen is characterized by a high fraction of proline and alanine, and also is assembled into characteristic elongated fibrils or rod-like, flexible structures. Prolamins arc one family of proteins found in non-animal sources, such as plant sources. Prolamins are highly abundant in plants and are similar in amino acid composition to collagen. Among proteins we tested for this purpose, prolamins were particularly favorable because of their low cost and their ability to readily form fibers or sheets when spun or extruded. Non-limiting examples of prolamin family proteins include, e.g., zein (found in corn), these include hordein from barley, gliadin from wheat, secalin, extensins from rye, kafirin from sorghum, avenin from oats. In fascia-type connective tissue, the prolamin family of proteins, individually or combinations thereof, demonstrates suitability for the protein component because they are highly abundant, similar in global amino acid composition to collagen (high fraction of proline and alanine), and amenable to processing into films and fibers. In addition to zein (found in corn), these include hordein from barley, gliadin from wheat, secalin, extensins from rye, kafirin from sorghum, avenin from oats. Other proteins may be necessary to supplement prolamins in order to achieve targets specifications for physicochemical and nutritional properties. The list of potential candidates here is essentially open and may include Rubisco, any major seed storage proteins, proteins isolated from fungi, bacteria, archaea, viruses, or genetically engineered microorganisms, or synthesized in vitro. The proteins may be artificially designed to emulate physical properties of animal connective tissue. animal-derived or recombinant collagen, extensins (hydroxyproline-rich glycoproteins abundant in cell walls e.g. Arabidopsis thaliana, monomers of which are "collagen-like" rod-like flexible molecules). The proteins may be artificially designed to emulate physical properties of animal connective tissue..

Methods for forming fascia-type connective tissue will be as those practiced in the art with a bias towards methods producing fibrous or fibrous-like structures by biological, chemical, or physical means, individually or in combination, serially or in parallel, before final forming. These methods may include extrusion or spinning.

Cartilage-type tissue is macroscopically homogenous, resistant against compression, has higher water content (up to 80%), lower protein (collagen) content, and higher polysaccharide (proteoglycans) contents (ca. 10% each).

Compositionally, cartilage-type connective tissue will be very similar to fascia-type tissue with the relative ratios of each adjusted to more closely mimic 'meat' connective tissue.

Methods for forming cartilage-type connective tissue will be similar to those for fascia-type connective tissue, but with a bias towards methods producing isotropically homogenous structures.

The fat can be suspended in a gel. In some embodiments the present invention provides for methods for producing droplets of fat suspended in the proteinaceous gel. The fat can be isolated from plant tissues and emulsified. The emulsification can utilize high-speed blending, homogenization, agitation or temperature changes. The lipid suspension can be sonicated or extruded to further alter the properties of the lipid in the solution. At this point, in some embodiments other components of the consumable are added to the solution followed by a gelling agent. In some embodiments crosslinking agents (e.g. transglutaminase or lysyl oxidase) are added to bind the components of the consumable. In other embodiments the gelling agent is added and the lipid/gel suspension is later combined with additional components of the consumable. In fascia-type connective tissue, the prolamin family of proteins, individually or combinations thereof, demonstrates suitability for the protein component because they are highly abundant, similar in global amino acid composition to collagen (high fraction of proline and alanine), and amenable to processing into films. In addition to zein (found in corn), these include hordein from barley, gliadin from wheat, secalin, extensions from rye, kafirin from sorghum, avenin from oats. Other proteins may be necessary to supplement prolamins in order to achieve targets specifications for physicochemical and nutritional properties. The list of potential candidates here is essentially open and may include any major seed storage proteins, animal-derived or recombinant collagen, extensins (hydroxyproline-rich glycoproteins abundant in cell walls e.g. Arabidopsis thaliana, monomers of which are "collagen-like" rod-like flexible molecules).

In some embodiments some or all of the components of the consumable are suspended in a gel. In various embodiments the gel can be a hydrogel, an organogel, or a xerogel, The gel can be made thick using an agent based on polysaccharides or proteins. For example fecula, arrowroot, cornstarch, katakuri starch, potato starch, sago, tapioca, alginin, guar gum, locust bean gum, xanthan gum, collagen, egg whites, furcellaran, gelatin, agar, carrageenan, cellulose, methylcellulose, hydroxymethylcellulose, acadia gum, konjac, starch, pectin, amylopectin or proteins derived from legumes, grains, nuts, other seeds, leaves, algae, bacteria, of fungi can be used alone or in combination to thicken the gel, forming an architecture or structure for the consumable. Enzymes that catalyze reactions leading to covalent crosslinks between proteins can also be used alone or in combination to form an architecture or structure for the consumable. For example transclutaminase, lysyl oxidases, or other amine oxidases (e.g. Pichia pastoris lysyl oxidase (PPLO)) can be used alone or in combination to form an architecture or structure for the consumable. In some embodiments multiple gels with different components are combined to form the consumable. For example a gel containing a plant-based protein can be associated with a gel containing a plant-based fat. In some embodiments fibers or stings of proteins are oriented parallel to one another and then held in place by the application of a gel containing plant based fats.

The compositions of the invention can be puffed or expanded by heating, such as frying, baking, microwave heating, heating in a forced air system, heating in an air tunnel, and the like, according to methods well known in the art.

In some embodiments multiple gels with different components are combined to form the consumable. For example a gel containing a plant-based protein can be associated with a gel containing a plant-based fat. In some embodiments fibers or strings of proteins are oriented parallel to one another and then held in place by the application of a gel containing plant based fats.

In some embodiments the meat replica contains no animal products, less than 1% wheat gluten, no methylcellulose, no carrageenan, no caramel color and no Konjac flour, no gum Arabic, and no acacia gum.

In some embodiments the meat replica contains no animal products, no wheat gluten, no methylcellulose, no carrageenan, no caramel color and no Konjac flour, no gum Arabic, and no acacia gum.

In some embodiments the meat replica contains no animal products, no soy protein isolate, no wheat gluten, no methylcellulose, no carrageenan, no caramel color and no Konjac flour, no gum Arabic, and no acacia gum.

In some embodiments the meat replica contains no animal products, no soy protein concentrate, no wheat gluten, no methylcellulose, no carrageenan, no caramel color and no Konjac flour, no gum Arabic, and no acacia gum.

In some embodiments the meat replica contains no animal products, no soy protein, no wheat gluten, no methylcellulose, no carrageenan, no caramel color and no Konjac flour, no gum Arabic, and no acacia gum.

In some embodiments the meat replica contains no animal products, no tofu, no wheat gluten, no methylcellulose, no carrageenan, no caramel color and no Konjac flour, no gum Arabic, and no acacia gum.

In some embodiments the meat replica contains no animal products, no tofu, and no wheat gluten.

In some embodiments the meat replica contains no animal products, no soy protein, and no wheat gluten.

In some embodiments the meat replica contains no methylcellulose, no carrageenan, no caramel color, no Konjac flour, no gum Arabic, and no acacia gum.

In some embodiments the meat replica contains no animal products and less than 5% carbohydrates.

In some embodiments the meat replica contains no animal products, no soy protein, no wheat gluten, no methylcellulose, no carrageenan, no caramel color and no Konjac flour, no gum Arabic, and no acacia gum and less than 5% carbohydrates.

In some embodiments the meat replica contains no animal products, and less than 1% cellulose.

In some embodiments the meat replica contains no animal products, and less than 5% insoluble carbohydrates.

In some embodiments the meat replica contains no animal products, no soy protein, and less than 1% cellulose.

In some embodiments the meat replica contains no animal products, no soy protein, and less than 5% insoluble carbohydrates.

In some embodiments the meat replica contains no animal products, no wheat gluten, and less than 1% cellulose.

In some embodiments the meat replica contains no animal products, no wheat gluten, and less than 5% insoluble carbohydrates.

The percentage of different components may also be controlled. For example non-animal-based substitutes for muscle, fat tissue, connective tissue, and blood components can be combined in different ratios and physical organizations to best approximate the look and feel of meat. The various can also components can be arranged to insure consistency between bites of the consumable. The components can be arranged to insure that no waste is generated from the consumable. For example, while a traditional cut of meat may have portions that are not typically eaten, a meat replicate can improve upon meat by not including these inedible portions. Such an improvement allows for all of the product made or shipped to be consumed, which cuts down on waste and shipping costs. Alternatively, a meat replica may include inedible portions to mimic the experience of meat consumption. Such portions can include bone, cartilage, connective tissue, or other materials commonly referred to as gristle, or materials included simulating these components. In some embodiments the consumable may contain simulated inedible portions of meat products which are designed to serve secondary functions. For example a simulated bone can be designed to disperse heat during cooking, making the cooking of the consumable faster or more uniform than meat. In other embodiments a simulated bone may also serve to keep the consumable at a constant temperature during shipping. In other embodiments, the simulated inedible portions may be biodegradable.

In some embodiments the meat substitute compositions contains no animal protein, comprising between 10-30% protein, between 5-80% water, between 5-70% fat, comprising one or more isolated purified proteins. In particular embodiments, the meat substitute compositions comprise transglutaminase.

In some embodiments the consumable contains components to replicate the components of meat. The main component of meat is typically skeletal muscle. Skeletal muscle typically consists of roughly 75 percent water, 19 percent protein, 2.5 percent intramuscular fat, 1.2 percent carbohydrates and 2.3 percent other soluble non-protein substances. These include organic acids, sulfur compounds, nitrogenous compounds, such as amino acids and nucleotides, and inorganic substances such as minerals. Accordingly, some embodiments of the present invention provide for replicating approximations of this composition for the consumable. F or example, in some embodiments the consumable is a plant-based meat replica can comprise roughly 75% water, 19% protein, 2.5% fat, 1.2% carbohydrates; and 2.3 percent other soluble non-protein substances. In some embodiments the consumable is a plant-based meat replica comprising between 60-90% water, 10-30% protein, 1-20% fat, 0.1-5% carbohydrates; and 1-10 percent other soluble non-protein substances. In some embodiments the consumable is a plant-based meat replica comprising between 60-90% water, 5-10% protein, 1-20% fat, 0.1-5% carbohydrates; and 1-10 percent other soluble non-protein substances. , In some embodiments the consumable is a plant-based meat replica comprising between 0-50% water, 5-30% protein, 20-80%% fat, 0.1-5% carbohydrates; and 1-10 percent other soluble non-protein substances. In some embodiments, the replica contains between 0.01% and 5% by weight of a heme protein. In some embodiments, the replica contains between 0.01% and 5% by weight of leghemoglobin. Some meat also contains myoglobin, a heme protein, which accounts for most of the red color and iron content of some meat. In some embodiments, the replica contains between 0.01% and 5% by weight of a heme protein. In some embodiments, the replica contains between 0.01% and 5% by weight of leghemoglobin. It is understood that these percentages can vary in meat and the meat replicas can be produced to approximate the natural variation in meat. Additionally, in some instances, the present invention provides for improved meat replicas, which comprise these components in typically unnatural percentages. For example a meat replica can be produced with a higher than typical average fat content. The percentages of these components may also be altered to increase other desirable properties.

In some instances a meat replica is designed so that, when cooked, the percentages of components are similar to cooked meat. So, in some embodiments, the uncooked consumable has different percentages of components than uncooked meat, but when cooked the consumable is similar to cooked meat. For example, a meat replica may be made with a higher than typical water content for raw meat, but when cooked in a microwave the resulting product has percentages of components similar to meat cooked over a fire.

In some embodiments the consumable is a meat replica with a lower that typical water content for meat. In some embodiments the inventions provides for methods for hydrating a meat replica to cause the meat replica to have a content similar to meat. For example a meat replica with a water content that would be low for meat, for example 1%, 10%, 20%, 30%, 40% or 50% water, is hydrated to roughly 75% water. Once hydrated, in some embodiments, the meat replica is then cooked for human consumption.

The consumable can have a protein component. In some embodiments the protein content of the consumable is 10%, 20%, 30%, or 40%. In some embodiments the protein content of the consumable is similar to meat. In some embodiments the protein content in the consumable is greater than that of meat. In some embodiments the consumable has less protein than meat.

The protein in the consumable can come from a variety or combination of sources. Non-animal sources can provide some or all of the protein in the consumable. Non-animal sources can include vegetables, fruits, nuts, grains, algae, bacteria, or fungi. The protein can be isolated or concentrated from one or more of these sources. In some embodiments the consumable is a meat replica comprising protein only obtained from non-animal sources.

In some embodiments protein is formed into asymmetric fibers for incorporation into the consumable. In some embodiments these fibers replicate muscle fibers. In some embodiments the protein are spun fibers. Accordingly, the present invention provides for methods for producing asymmetric or spun protein fibers. In some embodiments the consumable contains a protein or proteins that have all of the amino acids found in proteins that are essential for human nutrition. In some embodiments the proteins added to the consumable are supplemented with amino acids.

### INDICATORS OF COOKING MEAT

The release of odorants upon cooking is an important aspect of meat consumption. In some embodiments, the consumable is a meat replica entirely composed of non-animal products that when cooked generates an aroma recognizable by humans as typical of cooking beef. In some embodiments, the consumable when cooked generates an aroma recognizable by humans as typical of cooking pork. In some embodiments, the consumable is a meat replica entirely composed of non-animal products that when cooked generates an aroma recognizable by humans as typical of cooking bacon. In some embodiments, the consumable is a meat replica entirely composed of non-animal products that when cooked generates an aroma recognizable by humans as typical of cooking chicken. In some embodiments, the consumable is a meat replica entirely composed of non-animal products that when cooked generates an aroma recognizable by humans as typical of cooking lamb. In some embodiments, the consumable is a meat replica entirely composed of non-animal products that when cooked generates an aroma recognizable by humans as typical of cooking fish. In some embodiments, the consumable is a meat replica entirely composed of non-animal products that when cooked generates an aroma recognizable by humans as typical of cooking turkey. In some embodiments the consumable is a meat replica principally or entirely composed of ingredients derived from non-animal sources, with an odorant that is released upon cooking. In some embodiments the consumable is a meat replica principally or entirely composed of ingredients derived from non-animal sources, with an odorant that is produced by chemical reactions that take place upon cooking. In some embodiments the consumable is a meat replica principally or entirely composed of ingredients derived from non-animal sources, containing mixtures of proteins, peptides, amino acids, nucleotides, sugars and polysaccharides and fats in combinations and spatial arrangements that enable these compounds to undergo chemical reactions during cooking to produce odorants and flavor-producing compounds. In some embodiments the consumable is a meat replica principally or entirely composed of ingredients derived from non-animal sources, with a volatile or labile odorant that is released upon cooking. In some embodiments the consumable is a method for preparing a meat replica where meat replicas principally or entirely composed of ingredients derived from non-animal sources are heated to release a volatile or labile odorant.

Odorants released during cooking of meat are generated by reactions that can involve as reactants fats, protein, amino acids, peptides, nucleotides, organic acids, sulfur compounds, sugars and other carbohydrates. In some embodiments the odorants that combine during the cooking of meat are identified and located near one another in the consumable, such that upon cooking of the consumable the odorants combine. So, in some embodiments, the characteristic flavor and fragrance components are produced during the cooking process by chemical reactions involving amino acids, fats and sugars found in plants as well as meat. So, in some embodiments, the characteristic flavor and fragrance components are mostly produced during the cooking process by chemical reactions involving one or more amino acids, fats, peptides, nucleotides, organic acids, sulfur compounds, sugars and other carbohydrates found in plants as well as meat.

Some reactions that generate odorants released during cooking of meat can be catalyzed by iron, in particular the heme iron of myoglobin. Thus in some embodiments, some of the characteristic flavor and fragrance components are produced during the cooking process by chemical reactions catalyzed by iron. In some embodiments, some of the characteristic flavor and fragrance components are produced during the cooking process by chemical reactions catalyzed by heme.. In some embodiments, some of the characteristic flavor and fragrance components are produced during the cooking process by chemical reactions catalyzed by the heme iron in leghemoglobin. In some embodiments, some of the characteristic flavor and fragrance components are produced during the cooking process by chemical reactions catalyzed by the heme iron in a heme protein.

Evidence that the presence of leghemoglobin contributes favorably to aroma of meat replicas: A muscle replica comprising pea flour, sunflower oil, and glucose was heated for 10 minutes at 140C in the presence of either reduced leghemoglobin (LHb) or a mixture of iron (Fe3+), sodium and EDTA (EFS) in sealed containers carrying solid phase microextraction (SPME) fibers. These fibers contain polydimethylsiloxane (PDMS) which adsorbs volatile compounds for analysis by GC-MS. Analysis of GC-MS data from multiple replicas reveal consistent differences between the LHb and EFS samples. Non-limiting examples of compounds found exclusively or more abundantly in the LHb samples are: 2-octanone, 2-methyl furan, which are often associated with the aroma of cooked meat, and many other unidentified compounds. For example, Figure 1 shows a comparison of aligned GCMS profiles (in mirrored orientations) of otherwise identical muscle-replica samples cooked in the presence of leghemoglobin (LHb, Right side profile) or Ferric ion (Left side profile). In this illustration, the vertical axis represents retention time in the gas chromatography separation step, and the horizontal axis represents m/z ratios of ions produced by fragmentation of the corresponding separated volatile compounds. Selected compounds differentially represented in the two samples are labeled on the Right of the figure.

### COLOR INDICATORS

The color of meat is an important part the experience of cooking and eating meat. For instance, cuts of beef are of a characteristic red color in a raw state and gradually transition to a brown color during cooking. As another example, white meats such as chicken or pork have a characteristic pink color in their raw state and gradually transition to a white or brownish color during cooking. The amount of the color transition is used to indicate the cooking progression of beef and titrate the cooking time and temperature to produce the desired state of done-ness. In some aspects, the invention provides a non-meat based meat substitute product that provides a visual indicator of cooking progression. In some embodiments, the visual indicator is a color indicator that undergoes a color transition during cooking. In particular embodiments, the color indicator recapitulates the color transition of a cut of meat as the meat progresses from a raw to a cooked state. In more particular embodiments, the color indicator colors the meat substitute product a red color before cooking to indicate a raw state and causes the meat substitute product to transition to a brown color during cooking progression. In other particular embodiments, the color indicator colors the meat substitute product a pink color before cooking to indicate a raw state and causes the meat substitute product to transition to a white or brown color during cooking progression.

The main determinant of the nutritional definition of the color of meat is the concentration of iron carrying proteins in the meat. In the skeletal muscle component of meat products, one of the main iron-carrying proteins is myoglobin. It is estimated that the white meat of chicken has under 0.05%; pork and veal have 0.1-0.3%; young beef has 0.4-1.0%; and old beef has 1.5-2.0%. So, in some embodiments, the consumable is a meat replica which comprises an iron-carrying protein. In some embodiments, the meat replica comprises about 0.05%, about 0.1%, about 0.2%, about 0.3%, about 0.4%, about 0.5%, about 0.6%, about 0.7%, about 0.8%, about 0.9%, about 1%, about 1.1%, about 1.2%, about 1.3%, about 1.4%, about 1.5%, about 1.6%, about 1.7%, about 1.8%, about 1.9%, about 2%, or more than about 2% of an iron-carrying protein by dry weight or total weight. In some cases, the iron carrying protein has been isolated and purified from a source. In other cases, the iron carrying protein has not been isolated and purified. In some cases, the source of the iron-carrying protein is an animal source, or a non-animal source such as a plant, fungus, or genetically modified organisms such as, e.g., bacteria or yeast. In some cases, the iron-carrying protein is myoglobin. In some embodiments the consumable is a plant based meat replica that has animal myoglobin added. So, for example a replica of young beef can have about 0.4-1% myoglobin. In some cases, the iron-carrying protein is leghemoglobin. In some embodiments the consumable is a plant based meat replica that has leghemoglobin added. So, for example a replica of young beef can have about 0.4-1% leghemoglobin. In some cases, the iron-carrying protein is a cytochrome. In some embodiments the consumable is a plant based meat replica that has a cytochrome added. So, for example a replica of young beef can have about 0.4-1% of a cytochrome.

Another example of iron-carrying proteins is hemoglobin, the iron-containing oxygen-binding protein in the red blood cells of vertebrates. Hemoglobin is similar in color to myoglobin. In some embodiments the invention provides methods of saving and recycling blood from animal farming to supplement the color of a consumable. For example blood is saved from a slaughter house, hemoglobin from the blood is used to enhance the color of a consumable. In some aspects the consumable is a plant-based meat replica containing hemoglobin.

Additional iron containing proteins exist in nature. In some embodiments the consumable comprises an iron containing protein that is not myoglobin. In some embodiments the consumable does not contain myoglobin. In some embodiments the consumable does not contain hemoglobin. In some embodiments the consumable is a meat replica that comprises an iron containing protein other than myoglobin or hemoglobin.

Examples of iron containing proteins include hemoglobin, myoglobin, neuroglobin, cytoglobin, leghemoglobin, non-symbiotic hemoglobin, Hell's gate globin I, bacterial hemoglobins, ciliate myoglobins, flavohemoglobins. In various embodiments these iron containing proteins are added to the consumable to alter the visual characteristics or iron content of the consumable. In some embodiments the consumable comprises a hemoprotein (e.g. hemoglobin, myoglobin, neuroglobin, cytoglobin, leghemoglobin, non-symbiotic hemoglobin, Hell's gate globin I, bacterial hemoglobins, ciliate myoglobins, flavohemoglobins,).

Leghemoglobin, similar in structure and physical properties to myoglobin, is readily available as an unused by-product of commodity legume crops (eg., soybean, pea). The leghemoglobin in the roots of these crops in the US exceeds the myoglobin content of all the red meat consumed in the US. In some embodiments the consumable is a meat replica principally or entirely composed of ingredients derived from non-animal sources, including a muscle tissue replica, an adipose tissue replica, a connective tissue replica, and leghemoglobin. In some embodiments the consumable is a meat replica principally or entirely composed of ingredients derived from non-animal sources, containing a heme protein. In some embodiments the consumable is a meat replica principally or entirely composed of ingredients derived from non-animal sources, containing a leghemoglobin. In some embodiments the consumable is a meat replica principally or entirely composed of ingredients derived from non-animal sources, containing a member of the globin protein family. In some embodiments the consumable is a meat replica principally or entirely composed of ingredients derived from non-animal sources, with a high iron content from a heme protein. In some embodiments the iron content is similar to meat. In some embodiments the consumable has the distinctive red color of meat, such color provided by leghemoglobin.

Leghemoglobin is, in some embodiments, used as an indicator that the consumable is finished cooking. So, one embodiment of the invention is a method for cooking a consumable comprising detecting leghemoglobin which has migrated from the interior of the consumable to the surface when the product is cooked. Another embodiment of the invention is a method for cooking a consumable comprising detecting the change in color of from red to brown when the product is cooked.

A heme protein is, in some embodiments, used as an indicator that the consumable is finished cooking. So, one embodiment of the invention is a method for cooking a consumable comprising detecting leghemoglobin which has migrated from the interior of the consumable to the surface when the product is cooked. Another embodiment of the invention is a method for cooking a consumable comprising detecting the change in color of from red to brown when the product is cooked.

A heme protein from the group of: Hemoglobin, myoglobin, neuroglobin, cytoglobin, leghemoglobin, non-symbiotic hemoglobin, Hell's gate globin I, bacterial hemoglobins, ciliate myoglobins, flavohemoglobins, is, in some embodiments, used as an indicator that the consumable is finished cooking. So, one embodiment of the invention is a method for cooking a consumable comprising detecting leghemoglobin which has migrated from the interior of the consumable to the surface when the product is cooked. Another embodiment of the invention is a method for cooking a consumable comprising detecting the change in color of from red to brown when the product is cooked.

### Food products comprising isolated, purified leghemoglobin

In some embodiments leghemoglobin is added to meat to enhance the properties of meat. For example, a leghemglobin containing solution can be injected into raw or cooked meat. In another example a leghemoglobin solution is dripped over meat or a consumable of the invention to enhance appearance. In one embodiment advertising, photography, or videography of food products such as meat or a meat substitute is enhanced with leghemoglobin.

### Sources of leghemoglobin

In some embodiments the present invention provides methods for obtaining leghemoglobin from plants. Leghemoglobin can be obtained from a variety of plants. Various legumes species and their varieties, for example, Soybean, Fava bean, Lima bean, Cowpeas, English peas, Yellow peas, Lupine, Kidney bean, Garbanzo beans, Peanut, Alfalfa, Vetch hay, Clover, Lespedeza and Pinto bean, contain nitrogen-fixing root nodules in which leghemoglobin has a key role in controlling oxygen concentrations (for example root nodules from a pea plant, Figure 2). Figure 3 shows 100 mls of leghemoglobin solution isolated from 30 grams of pea root nodules. Leghemoglobins from different species are homologs and have similar color properties (Figure 4). In Figure 4, panel A shows an SDS_PAGE gels of lysed root-nodules of three legume plant species (1) Fava bean (2) English Pea (3) Soybean. Arrows mark respective leghemoglobins. Note that leghemoglobin is the most abundant soluble protein in each lysate. Panel B shows the similarity of UV-VIS spectral profile of leghemoglobins from two different plant species (Favabean and Soybean). We purified leghemoglobin from fava bean (green curve) and Soybean (red curve) root nodules using the protocol described elsewhere in the specification. UV-VIS spectra of both proteins shows that the heme iron is in the reduced (+2) state. Note that they are almost perfectly superimposed, consistent with their visually identical red color. The heme iron in the respective leghemoglobins was reduced to the +2 oxidation state by incubating Fava bean and Soybean leghemoglobin with 10mM sodium hydrosulfite in 20mM potassium-phosphate pH 7.4, 100mM sodium chloride buffer. Sodium hydrosulfite was then removed from the leghemoglobin solution using gel-exclusion chromatography. Inset shows a zoom-in of UV-VIS spectra in 450nm to 700nm region. Some plant species express several leghemoglobin isoforms (for example soybean has four leghemoglobin isoforms). Minor variations in precise amino acid sequence can modify overall charge of the protein at a particular pH and can modify precise structural conformation of iron containing heme group in leghemoglobin. Differences in structural conformation of heme group of different leghemoglobins can influence oxidation and reduction rates of the heme iron. These differences may contribute to color and flavor generation properties of different leghemoglobins.

Leghemoglobin has a virtually identical absorbance spectrum and visual appearance to myoglobin from animal muscle. Figure 5 shows a comparison of reduced (heme iron 2+) and oxidized (heme iron 3+) soybean leghemoglobin (Figure 5 panel A) and equine heart muscle myoglobin (Figure 5 panel B) showing similarity of UV-VIS absorption profiles of two proteins. We purified soybean leghemoglobin from soybean root-nodules using here described protocol. Purified equine myoglobin was purchased from SigmaAldrich. Soybean leghemoglobin (Figure 5 panel A) and equine myoglobin (Figure 5 panel B) were reduced with 1mm sodium hydrosulfite. Shown are UV-VIS absorption spectra of heme Fe3+ (blue line) and heme Fe2+ (red line) of soybean leghemoglobin (Figure 5 panel A) and equine myoglobin (Figure 5 panel B). Insets show a zoom-in of UV-VIS spectra in 450nm to 700nm region. (Figure 5 panel C) Images of 10ul liquid droplet of a 40 mg/ml solution of soybean leghemoglobin in the heme-Fe3+ state (left droplet) showing characteristic rusty red color and a 40mg/ml solution of soybean leghemoglobin solution in the heme-Fe2+ state (right droplet) showing characteristic red color of and (right image) corresponding samples of equine myoglobin.

In other embodiments, leghemoglobin can be sourced from non-plant sources, such as from organisms such as bacteria or yeast which have been genetically modified to express high levels of leghemoglobin.

The oxidation state of the iron ion in leghemoglobin is important for its color. Leghemoglobin with the heme iron in the +2 oxidation state appears vivid red in color, while leghemoglobin with the heme iron in the +3 oxidation state appears brownish red. Thus, in using leghemoglobin as a source of red color in a meat replica, it is desireable to reduce the heme iron from the +3 state to the +2 state. Heme iron in leghemoglobin can be switched from oxidized (+3) state to reduced (+2) state with reducing reagents. Examples of successful reduction of leghemoglobin heme iron with sodium hydrosulfite and titanium citrate are illustrated in Figure 6. In Figure 6 the UV-VIS spectrogram of purified soybean leghemoglobin in which the heme iron is in the oxidized (+3) state is represented by the blue curves in each panel. The red curves in each panel represent the UV-VIS spectra of the same leghemoglobin species after reduction to the (+2) state (red lines) by addition of (Panel A) 1mM sodium hydrosulfite or (Panel B) 0.24 % (wt/v) titanium citrate in 20mM potassium phosphate pH 7.3, 100mM sodium chloride buffer. The Insets show a zoom-in of UV-VIS spectra in 450 -700 nm region. For this example, leghemoglobin was purified from soybean root nodules using 60/90% ammonium sulfate fractionation and exchanged into 20mM potassium phosphate pH 7.4, 100mM sodium chloride buffer. Sodium hydrosulfite stock solution was prepared by dissolving 100mM sodium hydrosulfite in1mM sodium hydroxide in water. Titanium citrate stock solution was prepared from 20 % (wt/v) Ti-chloride in hydrochloric acid by mixing it with 0.2M sodium citrate (1:10 v/v). pH was adjusted using sodium carbonate to pH 7.0.

Leghemoglobin can be purified from legume root nodules, such as the root nodules of peas or soybeans (Figure 1 shows pea root nodules, Figure 2 shows Leghemoglobin isolated from same). Root nodules from soy beans were thoroughly cleaned to remove soil and extraneous root tissues prior to root nodule lysis in 20mM potassium phosphate pH 7.4, 100mM sodium chloride, 1mm EDTA and 1mM ascorbic acid. Root nodules were lysed by grinding root-nodules using a Vitamix blender. For some samples Polyvinylpyrrolidone polymer was added at 30% wt/v to aid in removal of plant phenolic small molecules that mediate oxidation of leghemoglobin heme-iron. Root nodule lysate was fractionated using ammonium sulfate in two steps, first ammonium sulfate was added to 60% wt/v. Pellet was discarded and supernatant brought to 90% wt/v. ammonium sulfate. Leghemoglobin was collected as a precipitated pellet in 90% ammonium sulfate fraction. Ammonium sulfate precipitated leghemoglobin was resuspended in 20mM potassium phosphate, 1mM EDTA, 50mM sodium chloride and ammonium sulfate was removed using dialysis or size-exclusion chromatography in the same buffer. In some instances this was the last purification step, while in other instances leghemoglobin was further purified using anion-exchange chromatography (FFQ GE Healthcare), which was sometimes followed by size-exclusion chromatography (Sephacryl S-100, GE Healthcare). Soybean leghemoglobin from 90% ammonium sulfate pellet was loaded on anion exchange columns (FFQ or DEAE, GE Healthcare) in different buffers (20mM potassium phosphate pH 7.4, containing 0 to 100mM sodium chloride, 20mM Tris pH 8 containing 0 to 100mM sodium chloride, 20mM sodium borax pH 9.8, 20mM sodium chloride, 20mM sodium carbonate pH 9, 20mM sodium chloride) and purified either in flow-through or using sodium chloride (0-1M salt gradient). An example of the leghemoglobin purification flow from soybean root nodules is represented in Figure 7. The figure shows SDS-PAGE fractionation of different soybean leghemoglobin purification steps (Lane 1) Soybean root-nodule lysate; (Lane 2) Soybean root-nodule lysate purified by 60/90 % (wt/v) ammonium sulfate fractionation. Shown is the protein content of 90% ammonium sulfate fractionated protein pellet resuspended in 20mm potassium phosphate pH 7.4, 100mM sodium chloride, 1mM EDTA buffer; Proteins from 90% ammonium sulfate pellet were further purified by anion-exchange chromatography (FFQ GE Healthcare) in 20mM potassium phosphate ph 7.4, 100mM sodium chloride. Leghemoglobin collected in the flowthrough is shown in Lane 3. Anion-exchange flowthrough was fractionated using size-exclusion chromatography (Sephacryl S-100 GE Healthcare) and resulting leghemoglobin fraction is shown in Lane 4. Leghemoglobin content at different purification steps was determined by determining the fraction of leghemoglobin band on SDS-PAGE gel in a respective sample using ImageDoc analysis software (BioRad). Purity (partial abundance) of leghemoglobin at respective steps in the purification steps was: lysate: 32.7% (lane 1), 60/90 % (wt/v) ammonium sulfate fractionation 78% (lane 2), anion-exchange chromatography ~ 83% (lane 3), and size-exclusion chromatography to ~ 95% (lane 4).

Leghemoglobin can also be produced by genetically engineering a bacterium or fungus to produce it. One illustrative example is shown in Figure 8. Figure 8 shows stained SDS-PAGE gel analysis of (A) soybean leghemoglobin expressed and purified using recombinant protein technology and (B) soybean leghemoglobin purified from soybean root nodules. (A) Recombinant Soybean leghemoglobin A carrying His-tag and TEV protease His-tag removal site was expressed in E.coli BL21 strain and purified using His-tag affinity chromatography (Talon resin, CloneTech). The left lane contains molecular weight standards, the right lane contains purified recombinant soybean leghemoglobin A (arrow). Expected molecular weight of the recombinant soybean leghemoglobin A is 17.1kDa. (B) SDS-PAGE gel of purified Soybean leghemoglobin from root nodules. The left lane contains molecular weight standards, the right lane contains purified soybean leghemoglobin A (arrow). Mass spectrometry analysis of purified material determined that all four soybean leghemoglobin isoforms are present, and are full length (data not shown). Expected molecular weights (MW) of soybean leghemoglobin isoforms range from MW15.4 to 15.8kDa.

Leghemoglobin purified from soybean and fava root nodules, respectively was tasted by a panel of volunteers and in each case described as tasting like blood.

Leghemoglobin can be isolated from the roots nodules of legumes such as soy beans, fava beans, cow peas, lima beans, garbanzo beans, peas, lupine, lotus japonicum or other legumes. The root nodule (for example root nodules from a pea plant, Figure 1) is obtained and homogenized in an aqueous solution, soluble proteins including leghemoglobin are recovered after insoluble matter is removed by precipitation or filtration. Leghemoglobin can be purified by selective precipitation and/or chromatography and/or the use of molecules with specific affinity for leghemoglobin . (Figure 2, showing 100 mls of solution of leghemoglobin isolated from 30 grams of pea root nodules).

Heme proteins, for example leghemoglobin, can be combined with other plant based meat replica components. In some embodiments the heme proteins are captured in a gel which contains other components, for example lipids and or proteins. In some aspects a multiple gels are combined with non-gel based heme proteins. In some embodiments the combination of the heme proteins and the other compounds of the consumable are done to insure that the heme proteins are able to diffuse through the consumable. In some embodiments the consumable is ed in a heme-protein containing solution, for instance a leghemoglobin solution,. In some embodiments the consumable is soaked in a heme protein containing solution, for instance a leghemoglobin solution for 1, 5, 10, 15, 20 or 30 hours. In some embodiments the consumable is soaked in a heme containing solution, for instance a leghemoglobin solution for 1, 5, 10, 15, 30, or 45 minutes.

Figure 9 shows an example of 6 cubes of a commercial meat analog (Quorn chicken analog), about 1cm on a side, 4 of which (Left and lower right) have been soaked in a solution of about 10 mg/ml soybean leghemoglobin in 20 mM Potassium phosphate pH 7.4 and 100 mM NaCl; the remaining two (Upper right) were soaked in the same buffer without leghemoglobin. Note the deep pink color of the leghemoglobin-infused cubes in contrast to the pale tan color of the un-infused cubes.

Figure 10 shows the 4 leghemoglobin-infused cubes of Quorn chicken analog in the process of cooking in a pan at 350°C. The two lower cubes have been turned over to expose the grilled surface, which has turned brown. Note in the upper two cubes that the heated portion has turned grey-brown, while the cooler top surface retains its pink color. In some embodiments the consumable is injected with a heme containing solution, for instance a leghemoglobin solution, until the consumable is the color of uncooked meat.

Given the usefulness of heme proteins for coloring consumables it will be useful to detect whether a product contains a particular heme protein. Accordingly the present invention includes in some embodiments methods to determine whether a product contains a heme protein. Methods for detecting proteins are well known in the art. For example an ELISA or proximity-ligation assoacy or luninex assay or western blot analysis can be performed to determine whether leghemoglobin is present in a food product such as meat or a meat replica. In one embodiment the detection methods are performed to determine whether meat has been altered with leghemoglobin.

### Examples

An exemplary muscle replica composition comprising one or more isolated, purified plant proteins is described herein.

### Protein purification for components of the replica

Moong bean seeds, Green Pea dry seed were purchased as milled flour and used for purification of respective seed storage proteins. Rubsico was purified from fresh alfalfa plant. Protein composition at individual fractionation steps was monitored by SDS-PAGE and protein concentrations were measured by standard UV-VIS and Pierce assay methods.

Moong bean 8S globulins: Moong bean flour was resuspended in in 50mM potassium phosphate buffer pH 7 and 0.5M NaCl at 1:4 (wt/v) ratio, and mixture was incubated for 1hr. Unsoluble material was separated by centrifugation and proteins in the supernatant were fractionated by addition of ammonium sulfate in 2 steps: 50% (wt/v) followed by 90% (wt/v). Protein precipitated in 90% fraction contained the moong bean 8S globulins and was stored at -20C until further use.

Pea-albumins: Green pea dry seed flour was resuspended at 1: 10 (wt/v) ratio in 50mM sodium acetate buffer pH 5 and incubated for 1hr. Unsoluble material was separated by centrifugation and proteins in the supernatant were fractionated by ammonium sulfate precipitation in two steps: 50% (wt/v) followed by 90% (wt/v). Ammonium sulfate solutions were stirred for 1 hour and ammonium sulfate precipitated proteins removed by centrifugation. Proteins of interest precipitated in 90% (wt/v) ammonium sulfate. Pellet was stored at -20C until further use.

Pea-globulins: Green pea dry seed flour was resuspended at 1: 10 (wt/v) ratio in 20mM potassium phosphate buffer pH 8, 0.4M sodium chloride and stirred for 1hr. After centrifugation, the supernatant was subjected to ammonium sulfate fractionation. First, supernatant was brought to 50% (wt/v) ammonium sulfate, and precipitated proteins removed. Second, 50% (wt/v) ammonium sulfate supernatant was brought to 80% (wt/v) ammonium sulfate saturation. The 80% (wt/v) ammonium sulfate pelleted protein contained globulins of interest. Pellet was stored at -20'C until further use.

RuBisCO: RuBisCO was fractionated from alfalfa greens (or other green plants eg soybean plants, spinach etc) by first grinding leaves with 4 volumes of cold 50mM KPhosphate buffer pH 7.4 buffer (with (in lab) or without (in field) 0.5M NaCl + 2mM DTT + 1mM EDTA) in a blender. The resulting slurry was centrifuged to remove debris, and the supernatant (crude lysate) was used in further purification steps. Proteins in the crude lysate were fractionated by addition of ammonium sulfate to 30% (wt/v) saturation. The solution was stirred for 1hr and then centrifuged. The pellet from this step was discarded and additional ammonium sulfate was added to the supernatant to 50 % (wt/v) ammonium sulfate saturation. The solution was centrifuged again after stirring for 1hr. The pellet from this step contains RuBisCO, and was kept at -20C until used.

### Obtaining plant proteins.

Moong bean seed 8S protein was purified by ammonium sulfate fractionation as described. Pellet was resuspended in 20mM potassium phosphate pH pH 7.4 and 0.5M sodium chloride and ammonium sulfate removed by dialysis against the same buffer. Any precipitate was removed by centrifugation at 16 000g, 10min and protein concentrated to desired concentration. Pea globulins purified by ammonium sulfate fractionation as described. Protein pellet was resuspended in 20mM potassium phosphate pH pH 7.4 and 0.4M sodium chloride and ammonium sulfate removed by dialysis against the same buffer. Any precipitate was removed by centrifugation at 16 000g, 10min and protein concentrated to desired concentration. Pea albumin purified by ammonium sulfate fractionation as described. Protein pellet was resuspended in 20mM potassium phosphate pH pH 7.4 and 0.1M sodium chloride and ammonium sulfate removed by dialysis against the same buffer. Any precipitate was removed by centrifugation at 16 000g, 10min and protein concentrated to desired concentration.

### Constructing a Muscle Tissue Analog

Moong bean seed 8S protein was purified by ammonium sulfate fractionation as described above, For preparation of gels, 200 g of pellet was dissolved in 400 ml of dialysis buffer (20 mM potassium phosphate, 400 mM NaCl, pH 7.3) and the resulting solution dialyzed for 6 hours against 5l of dialysis buffer, replaced twice with fresh buffer. Protein solution was centrifuged at 12,000 g for 15 min to remove debris. Protein was concentrated by dialyzing for 36 hours against 5 l of 30% w/w solution of PEG 8000 (polyethylene glycol, molecular weight 8000) in dialysis buffer. Final protein concentration was 150 mg/ml.

Leghemoglobin was purified from soybean root nodules. Legume root nodules were cleaned to remove soil and extraneous root tissues prior to root nodule lysis in 20mM potassium phosphate pH 7.4, 100mM sodium chloride, 1mm EDTA and 1mM ascorbic acid. Root nodules were lysed by grinding root-nodules using juicer blender. Unsoluble material was separated by centrifugation. Root nodule lysate was fractionated using ammonium sulfate in two steps, first ammonium sulfate was added to 60% wt/v and solution incubated for 1hr, 4'C. Pellet was discarded and supernatant brought to 90% wt/v ammonium sulfate and incubated for 12hr, 4'C. Leghemoglobin was collected as a precipitated pellet in 90% ammonium sulfate fraction and resuspended in 20mM potassium phosphate, 1mM EDTA, 100mM sodium chloride. SDS-PAGE gel analysis determined that protein solution contains 70% leghemoglobin and 30% other root nodule proteins. Ammonium sulfate was removed using size-exclusion chromatography in the same buffer. Leghemoglobin was concentrated by dialyzing for 48hr against 30% PEG 8000 (polyethylene glycol, molecular weight 8000) in 20mM potassium phosphate pH 7.3, 100mM sodium chloride. Total protein concentration was 57mg/ml. UV-VIS spectra suggested that leghemoglobin was in heme-iron oxidized state. Thus, leghemoglobin was incubated with 5mM sodium hydrosulfite for 5min and sodium hydrosulfite was removed using size-exclusion chromatography in 20mM potassium phosphate, 100mM sodium chloride buffer. Leghemoglobin was further concentrated to 35.4 mg/ml. UV-VIS spectra analysis confirmed that leghemoglobin is in heme-iron reduced state.

Transglutaminase was obtained commercially from (Activa TI, Ajimoto). Stock solution (20% wt/v) was made in 20mM potassium phosphate pH 7.3, 100mM sodium chloride buffer.

To prepare "dark" muscle tissue analog (Figure 11), 43 ml of moong bean protein solution (150 mg/ml in dialysis buffer) were mixed with 37 ml of leghemoglobin solution (46.5 mg/ml leghemoglobin and 20mg/ml of other soybean root nodule protein) in 20 mM potassium phosphate, 100 mM NaCl, pH 7.3). 20 ml of transglutaminase solution (20% w/w) were added, solutions thoroughly mixed, divided into two 50 ml Falcon tubes and incubated overnight at room temperature. Final protein concentrations were 65 mg/ml for moong bean protein, 18 mg/ml of leghemoglobin, 91 mg/ml total protein.

"White" muscle analog (Figure 12) was prepared by mixing 43ml moong bean protein solution (150mg/ml) with 45ml of 11.7 mg/ml solution of leghemoglobin and 0.8 % (wt/v) of transglutaminase solution. Final protein concentrations were 63 mg/ml for moong bean protein, 5.2 mg/ml of leghemoglobin, 68 mg/ml total protein.

The "dark" muscle tissue analog formed an opaque gel of dark chocolate color, smooth uniform texture, with glistening surface, and a small amount (< 1 ml) of dark red, venous blood colored liquid on top. The gel was freely standing, elastic but fragile, similar in appearance to thin Jell-O. The gel has a medium aroma with notes of beans and blood clearly discernible. The flavor is dominated by notes of beans and iron/blood, with weaker grassy and medicinal/chemical flavors. The taste is salty, with a long aftertaste of blood.

The "white" muscle tissue analog was very similar, but with much lighter, cappuccino-like, color. It was also more fragile, 2-3-fold less strong against compression.

### Fat Tissue Analog

Fat tissue analog using moong bean 8S globulin fraction was prepared as follows: 15 ml of moong bean protein solution (150 mg/ml in dialysis buffer) were mixed with 15 ml of rice bran oil. 6 ml of transglutaminase solution (20% w/w) were added, solutions thoroughly emulsified using a homogenizer (VWR) at speed #2. Emulsion was aliquoted into 1.6 eppendorf tubes and incubated overnight at room temperature. After that, tubes were heated at 95 °C for 5 min in a heat block, and allowed to cool down to room temperature on a bench. Final concentrations were 75 mg/ml for moong bean protein, 50% w/w oil.

Fat tissue analog using pea globulin (100 mg/ml) was prepared by the same method. Additionally, fat tissue analog was prepared from pea globulin, and either rice bran or canola oil, in bulk by the same method, but without aliquoting emulsions into eppendorf tubes. Instead, emulsions in 50 ml Falcon tubes were rotated overnight on a nutator, and were subsequently incubated at 90 °C for 30 min.

Fat tissue analog based on moong beans (Figure 13) and prepared in eppendorf tubes formed an opaque gel of off-white color, smooth uniform texture, with no visible discernible liquid that was not incorporated into the gel. The gel was freely standing, elastic and springy. The gel has a slight, pleasant aroma and a mild and pleasant flavor. The taste is mildly salty.

Fat tissue analog based on pea globulin (Figure 14) and prepared in eppendorf tubes was very similar to moong bean-based fat analog, except that it gave up a little of oil upon compression. Fat tissue analog prepared in 50 ml Falcon tubes were similar in appearance, texture and aromas, but substantially softer (2-fold softer for canola oil, and 3-fold softer for rice bran oil, according to compressibility measurements).

### Connective Tissue Analog

Connective tissue analog prototypes were developed using zein protein sourced from 100% yellow corn gluten meal, or from commercial sources, such as Amazein (Prairie Gold, Bloomington, IL). Zein proteins were solubilized in 70 - 90% ethanol with desired ratios at 1:3 to 1:5 (solids:solution). By precipitating zein proteins, for example by a change in pH, in a controlled manner, large zein structures result with physicochemical properties that can be manipulated as desired. For example, Figure 15 shows connective-tissue analog strands that were created using a 1:3 ratio in 70% ethanol, loaded into a syringe with a 23 gauge needle (ID 0.337 mm). The solution was slowly extruded from the bottom of a 5 inch-high vessel into an excess of 5 M NaCl solution. The cthanol-zcin solution being less dense than the NaCl solution, floated upward, drawing out a fibrous stand of solidifying zein. The NaCl was constantly stirred as the strands began to develop to assist in the strand lengthening. The strands bunch together and become a hard, dense mass.

Ground beef replica prototypes made from gels of plant proteins and plant oils.

A ground beef prototype patty was made by combining 62% (wt/wt) muscle analog (62% (wt/wt) "dark muscle analog" and 38% (wt/wt) "white muscle analog"), 29% (wt/wt) fat tissue analog (from pea globulin and canola oil), 5% (wt/wt) connective tissue analog (Figure 16 panel A). A ground beef prototype patty was made by combining 62% muscle analog ( 62% "dark muscle analog" and 38% "white muscle analog), 29% fat tissue analog (from moong bean seed 8S protein and rice bran oil) , 5% connective tissue analog (Figure 16 panel B). A ground beef prototype patty was made by combining 71 % (wt/wt) muscle tissue analog (composed of 60% "white" muscle analog, 40 % "dark" muscle analog) , 23% fat tissue (from pea seed globulin proteins and canola oil) (Figure 16 panel C). A ground beef prototype patty was made by combining 67% "White" muscle analog, with 28% fat tissue analog (from pea globulins and rice bran oil), (Figure 16, panel D)

In a further test, the effect of cooking the ground beef replica patties was evaluated by grilling on a 350°F pan. A ground beef patty analog was made by combining 62% (wt/wt) muscle tissue analog (62% (wt/wt) "dark muscle analog" and 38% (wt/wt) "muscle analog"), 29% (wt/wt) fat tissue analog (from pea globulin and canola oil), 5% (wt/wt) connective tissue analog (Figure 17). The panel on the left shows the patty before cooking and the panel on the right shows the same patty after cooking for about 2 minutes. Observers described the aroma of the cooking ground beef replica as distinctly "beefy".

### SUMMARY PARAGRAPHS

1. A meat substitute composition comprising a protein content, wherein one or more isolated and purified proteins accounts for 10% or more of said protein content by weight, wherein said meat substitute composition accurately mimics the taste, texture, or color of a meat product derived from animal sources.
2. The meat substitute composition of paragraph 1, wherein said composition accurately mimics the color of said meat product in its raw state and in a cooked state after cooking.
3. The meat substitute composition of paragraph 1, wherein said one or more isolated and purified proteins accounts for 25% or more of said protein content by weight.
4. The meat substitute composition of paragraph 3, wherein said one or more isolated and purified proteins accounts for 50% or more of said protein content by weight.
5. The meat substitute composition of paragraph 4, wherein said one or more isolated and purified proteins accounts for 75% or more of said protein content by weight.
6. The meat substitute composition of paragraph 5, wherein said one or more isolated and purified proteins accounts for 90% or more of said protein content by weight.
7. The meat substitute composition of paragraph 1, wherein gluten does not account for 10% or more of said protein content by weight.
8. The meat substitute composition of paragraph 1, wherein each of said isolated, purified proteins is separately isolated and purified.
9. The meat substitute composition of paragraph 1, comprising 1-7 isolated and purified proteins.
10. The meat substitute composition of paragraph 9, wherein said 1-7 isolated and purified proteins are each isolated from different plant species.
11. The meat substitute composition of paragraph 10, wherein said protein content comprises no more than trace amounts of any other proteins derived from the different plant species.
12. The meat substitute composition of any paragraph 1, wherein said one or more isolated and purified proteins are selected from the group consisting of hemoglobin, myoglobin, chlorocruorin,erythrocruorin, neuroglobin, cytoglobin, protoglobin, truncated 2/2 globin, HbN, cyanoglobin,HbO, Glb3, and cytochromes, Hell's gate globin I, bacterial hemoglobins, ciliate myoglobins,flavohemoglobins, ribosomal proteins, actin, hexokinase, lactate dehydrogenase, fructose bisphosphate aldolase, phosphofructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin,gliadin, glutelin, gluten, glutenin, hordein, prolamin, phaseolin (protein), proteinoplast, secalin,extensins, triticeae gluten, zein, any seed storage protein, oleosins, caloleosins, steroleosins or other oil body proteins, vegetative storage protein A, vegetative storage protein B, moong seed storage 8S globulin.
13. The meat substitute composition of paragraph 1, wherein said one or more isolated and purified proteins are not isolated from an animal.
14. The meat substitute composition of paragraph 13, wherein said one or more isolated and purified proteins are isolated from a single plant source.
15. The meat substitute composition of paragraph 14, wherein said one or more isolated and purified proteins are isolated from multiple plant sources.
16. The meat substitute composition of paragraph 13, wherein said one or more isolated, purified proteins are isolated from a genetically modified organism.
17. The meat substitute composition of paragraph 16, wherein said genetically modified organism is a genetically modified bacteria or yeast organism.
18. The meat substitute composition of any of the preceding paragraphs, wherein said isolated, purified protein has been formed into fibers.
19. The meat substitute composition of paragraph 18, wherein said fibers resemble skeletal muscle fibers.
20. The meat substitute composition of c paragraph 19, wherein said fibers are asymmetric fibers.
21. The meat substitute composition of any of the preceding paragraphs, further comprising one or more isolated and purified iron-containing proteins.
22. The meat substitute composition of paragraph 21, wherein said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, Hell's gate globin I, bacterial hemoglobins, ciliate myoglobins, and flavohemoglobins.
23. The meat substitute composition of paragraph 22, wherein said iron-containing protein comprises an amino acid sequence with at least 70% homology to SEQ ID NO 1.
24. The meat substitute composition of any of the preceding paragraphs, wherein said isolated and purified proteins are assembled into one or more gels.
25. The meat substitute composition of any of the preceding paragraphs, further comprising one or more fats.
26. The meat substitute composition of paragraph 25, wherein said one or more fats are derived from a plant source.
27. A meat substitute product that comprises an indicator that indicates cooking progression from a raw state to a cooked state, wherein said meat substitute product is derived from non-animal sources.
28. The meat substitute product of paragraph 27, wherein said indicator is a visual indicator that accurately mimics the color transition of a meat product during said cooking progression.
29. The meat substitute product of paragraph 28, wherein said color transition is from red to brown.
30. The meat substitute product of paragraph 28, wherein said color transition is from pink to white or tan.
31. The meat substitute product of paragraph 28, wherein said visual indicator transitions from a translucent to opaque color during said cooking progression.
32. A meat substitute product of paragraph 27 wherein the indicator is an olfactory indicator that indicates cooking progression.
33. The meat substitute product of paragraph 32, wherein said olfactory indicator is one or more volatile odorants released during cooking.
34. The meat substitute product of any of paragraphs 32, wherein said indicator comprises one or more isolated, purified iron-containing proteins.
35. The meat substitute product of paragraph 34, wherein said one or more isolated, purified iron-containing proteins is in a reduced state before cooking.
36. The meat substitute product of paragraph 34, wherein said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin,truncated 2/2 globin, HbN, cyanoglobin, HbO, Glb3, cytochromes, Hell's gate globin I, bacterial hemoglobins, ciliate myoglobins, and flavohemoglobins.
37. The meat substitute product of paragraph 36, wherein said iron-containing protein comprises an amino acid sequence with at least 70% homology to SEQ ID NO 1.
38. The meat substitute product of paragraph 34, wherein said one or more isolated and purified iron-containing proteins are not isolated from an animal.
39. The meat substitute product of paragraph 34, wherein said one or more isolated and purified iron-containing proteins are isolated from one or more plant sources.
40. The meat substitute product of paragraph 39, wherein said one or more isolated, purified proteins are isolated from the root nodules, roots, seeds, leaves, or stems of said one or more plant sources.
41. The meat substitute product of paragraph 40, wherein said one or more plant sources are soy or pea plants.
42. The meat substitute composition of paragraph 39, wherein said one or more plant sources comprises one or more plants of the legume family.
43. The meat substitute product of paragraph 38, wherein said one or more isolated and purified iron carrying proteins in a reduced or oxidized state has a similar UV-VIS profile to a myoglobin protein derived from an animal source when in an equivalent reduced or oxidized state.
44. The meat substitute product of paragraph 43, wherein the difference between the peak absorbance wavelength of said one or more isolated and purified iron-containing proteins and the peak absorbance wavelength of myoglobin derived from an animal source is less than 5%.
45. The meat substitute product of paragraph 38, wherein said one or more isolated, purified proteins are isolated from a genetically modified organism.
46. The meat substitute product of paragraph 45, wherein said genetically modified organism is a genetically modified bacteria or yeast organism.
47. The meat substitute product of any of paragraphs 1-46 wherein said meat substitute product contains no methylcellulose, no carrageenan, no caramel color, no konjac flour, no gum arabic, and no acacia gum.
48. The meat substitute product of paragraph 47, wherein said meat substitute product contains less than 1% wheat gluten.
49. The meat substitute product of paragraph 48, wherein said meat substitute product contains no wheat gluten.
50. The meat substitute product of paragraph 49, wherein said meat substitute product contains no soy protein isolate.
51. The meat substitute product of paragraph 49, wherein said meat substitute product contains no soy protein concentrate.
52. The meat substitute product of paragraph 49, wherein said meat substitute product contains no soy protein.
53. The meat substitute product of paragraph 49, wherein said meat substitute product contains less than 5% carbohydrates.
54. The meat substitute product of paragraph 49, wherein said meat substitute product contains no tofu.
55. The meat substitute product of any of paragraphs 1-46, wherein said meat substitute product contains no tofu, and no wheat gluten.
56. The meat substitute product of any of paragraphs 1-46, wherein said meat substitute product contains no soy protein, and no wheat gluten.
57. The meat substitute product of any of paragraphs 1-46, wherein said meat substitute product contains no animal products and less than 5% carbohydrates.
58. The meat substitute product of any of paragraphs 1-46, wherein said meat substitute product contains less than 1% cellulose.
59. The meat substitute product of any of paragraphs 1-46, wherein said meat substitute product contains less than 5% insoluble carbohydrates.
60. The meat substitute product of any of paragraphs 1-46, wherein said meat substitute product contains no soy protein, and less than 1% cellulose.
61. The meat substitute product of any of paragraphs 1-46, wherein said meat substitute product contains no soy protein, and less than 5% insoluble carbohydrates.
62. The meat substitute product of any of paragraphs 1-46, wherein said meat substitute product contains no wheat gluten, and less than 1% cellulose.
63. The meat substitute product of any of paragraphs 1-46, wherein said meat substitute product contains no wheat gluten, and less than 5% insoluble carbohydrates.
64. A muscle tissue replica comprising a protein content, wherein said protein content comprises one or more isolated and purified proteins, wherein said muscle tissue replica approximates the taste, texture, or color of an equivalent muscle tissue derived from an animal source.
65. The muscle tissue replica of paragraph 64, wherein said one or more isolated and purified proteins accounts for at least 50% of said protein content by weight.
66. The muscle tissue replica of paragraph 64, wherein said protein content is derived from one or more non-animal sources.
67. The muscle tissue replica of paragraph 66, wherein said one or more non-animal sources is a plant source.
68. The muscle tissue replica of paragraph 66, wherein said one or more non-animal sources is a genetically modified yeast or bacteria.
69. The muscle tissue replica of paragraph 64, wherein each of said one or more isolated proteins is isolated and purified separately.
70. The muscle tissue replica of any of the preceding paragraphs, wherein said one or more isolated proteins are selected from the group consisting of hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, and moong seed storage 8S globulin.
71. The muscle tissue replica of paragraph 70, wherein said seed storage protein is moong bean 8S protein.
72. The muscle tissue replica of paragraph 64, wherein said protein content is suspended in a gel.
73. The muscle tissue replica of paragraph 64, wherein said protein content is in the form of a gel.
74. The muscle tissue replica of paragraph 72 or 73, wherein said gel comprises an isolated, purified cross-linking enzyme.
75. The muscle tissue replica of paragraph 74, wherein said isolated, purified cross-linking enzyme is selected from the group consisting of transglutaminase, lysyl oxidases, and amine oxidases.
76. The muscle tissue replica of paragraph 75, wherein said isolated, purified cross-linking enzyme is transglutaminase.
77. The muscle tissue replica of paragraph 64, wherein said protein content has been assembled into fibers.
78. The muscle tissue replica of paragraph 77, wherein said fibers are arranged isotropically.
79. The muscle tissue replica of paragraph 78, wherein said fibers are asymmetric fibers.
80. The muscle tissue replica of paragraph 64, further comprising one or more isolated and purified iron-containing proteins.
81. The muscle tissue replica of paragraph 80, wherein said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins.
82. The muscle tissue replica of paragraph 80, wherein said one or more isolated and purified iron-containing proteins comprises an amino acid sequence with at least 70% homology to SEQ ID NO 1.
83. The muscle tissue replica of paragraph 64, comprising a protein content, wherein (i) one isolated and purified protein that is not an iron-containing protein accounts for 40-95% of said protein content,(ii) one or more isolated and purified iron-containing proteins accounts for 1-20% of said protein content, and (iii) one or more cross-linking reagents accounts for 0.1-35% of said protein content.
84. The muscle tissue replica of paragraph 64, wherein said protein content accounts for 5-50% of said replica by weight or by weight/volume.
85. The muscle tissue replica of paragraph 83, wherein said one isolated and purified protein is moong bean 8S protein.
86. The muscle tissue replica of paragraph 83, wherein said one or more isolated and purified iron-containing proteins is leghemoglobin.
87. The muscle tissue replica of paragraph 83, wherein said one or more cross-linking reagents is transglutaminase.
88. The muscle tissue replica of any of paragraphs 64-87, wherein said muscle tissue replica contains no methylcellulose, no carrageenan, no caramel color, no konjac flour, no gum arabic, and no acacia gum.
89. The muscle tissue replica of paragraph 88, wherein said muscle tissue replica contains less than 1%wheat gluten.
90. The muscle tissue replica of paragraph 89, wherein said muscle tissue replica contains no wheat gluten.
91. The muscle tissue replica of paragraph 90, wherein said muscle tissue replica contains no soy protein isolate.
92. The muscle tissue replica of paragraph 90, wherein said muscle tissue replica contains no soy protein concentrate.
93. The muscle tissue replica of paragraph 90, wherein said muscle tissue replica contains no soy protein.
94. The muscle tissue replica of paragraph 93, wherein said muscle tissue replica contains less than 5 % carbohydrates.
95. The muscle tissue replica of paragraph 90, wherein said muscle tissue replica contains no tofu.
96. The muscle tissue replica of any of paragraphs 64-87, wherein said muscle tissue replica contains no tofu, and no wheat gluten.
97. The muscle tissue replica of any of paragraphs 64-87, wherein said muscle tissue replica contains no soy protein, and no wheat gluten.
98. The muscle tissue replica of any of paragraphs 64-87, wherein said muscle tissue replica contains no animal products and less than 5% carbohydrates.
99. The muscle tissue replica of any of paragraphs 64-87, wherein said muscle tissue replica contains less than 1% cellulose.
100. The muscle tissue replica of any of paragraphs 64-87, wherein said muscle tissue replica contains less than 5% insoluble carbohydrates.
101. The muscle tissue replica of any of paragraphs 64-87, wherein said muscle tissue replica contains no soy protein, and less than 1% cellulose.
102. The muscle tissue replica of any of paragraphs 64-87, wherein said muscle tissue replica contains no soy protein, and less than 5% insoluble carbohydrates.
103. The muscle tissue replica of any of paragraphs 64-87, wherein said muscle tissue replica contains no wheat gluten, and less than 1% cellulose.
104. The muscle tissue replica of any of paragraphs 64-87, wherein said muscle tissue replica contains no wheat gluten, and less than 5% insoluble carbohydrates.
105. A fat tissue replica comprising a gelled emulsion, said gelled emulsion comprising a protein solution with fat droplets suspended therein.
106. The fat tissue replica of paragraph 105, wherein said fat droplets are derived from a non-animal source.
107. The fat tissue replica of paragraph 105, wherein said fat droplets are comprised of one or more plant oils.
108. The fat tissue replica of paragraph 107, wherein said one or more plant oils is selected from the group consisting of com oil, olive oil, soy oil, peanut oil, walnut oil, almond oil, sesame oil, cottonseed oil, rapeseed oil, canola oil, safflower oil, sunflower oil, flax seed oil, algal oil, palm oil, palm kernel oil, coconut oil, babassu oil, shea butter, mango butter, cocoa butter, wheat germ oil, rice bran oil, oils produced by bacteria, algae, archaea or fungi or genetically engineered bacteria, algae, archaea or fungi, triglycerides, monoglycerides, diglycerides, sphingosides, glycolipids, lecithin, lysolecithin, phophatidic acids, lysophosphatidic acids, oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, conjugated oleic acid, or esters of: oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or glycerol esters of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or triglyceride derivatives of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid.
109. The fat tissue replica of paragraph 108, wherein said one or more plant oils is rice bran oil or canola oil.
110. The fat tissue replica of paragraph 105, wherein said protein solution comprises one or more isolated, purified proteins.
111. The fat tissue replica of paragraph 110, wherein said one or more isolated, purified proteins accounts for 75% or more of the protein in said protein solution.
112. The fat tissue replica of paragraph 112, wherein said one or more isolated, purified proteins are derived from a non-animal source.
113. The fat tissue replica of paragraph 112 wherein said non-animal source is a plant source.
114. The fat tissue replica of paragraph 110, wherein said non-animal source is a genetically modified yeast or bacteria.
115. The fat tissue replica of paragraph 110, wherein each of said one or more isolated proteins is isolated and purified separately.
116. The fat tissue replica of paragraph 110 wherein said one or more isolated proteins are selected from
   the group consisting of hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofiructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin.
117. The fat tissue replica of paragraph 116 wherein said one or more isolated, purified proteins is an albumin protein, a seed storage protein, or pea globulin protein.
118. The fat tissue replica of paragraph 116 wherein said albumin protein is isolated pea albumin protein.
119. The fat tissue replica of paragraph 116, wherein said seed storage protein is moong bean 8S protein.
120. The fat tissue replica of paragraph 105, wherein said gelled emulsion comprises
   a) a protein solution comprising 1-3 isolated and purified proteins, wherein said solution accounts for 30-70% of the volume of said emulsion;
   b) a plant oil, wherein said plant oil accounts for 30-70% of the volume of said emulsion; and
   c) an isolated, purified cross-linking enzyme, wherein said cross-linking enzyme accounts for 0.0001-1% of said emulsion by wt/volume;
   wherein said plant oil is emulsified in said protein solution, wherein said emulsion is formed into a gel by said cross-linking enzyme.
121. The fat tissue replica of paragraph 105, wherein said gelled emulsion comprises
   a) a protein solution comprising 1-3 isolated and purified proteins, wherein said solution accounts for 1-30% of the volume of said emulsion;
   b) a plant oil, wherein said plant oil accounts for 70-99% of the volume of said emulsion; and
   c) an isolated, purified cross-linking enzyme, wherein said cross-linking enzyme accounts for 0.5-0.0001-1% of said emulsion by wt/volume;
   wherein said plant oil is emulsified in said protein solution, wherein said emulsion is formed into a gel by said cross-linking enzyme.
122. The fat tissue replica of paragraph 105, further comprising a cross-linking enzyme.
123. The fat tissue replica of paragraph 122, wherein said cross-linking enzyme is transglutaminase.
124. The fat tissue replica of paragraph 120 or 121, wherein one of said 1-3 isolated and purified proteins is moong bean 8S protein, pea albumin protein, or pea globulin protein.
125. The fat tissue replica of paragraph 120 or 121, wherein said plant oil is rice bran oil or canola oil.
126. The fat tissue replica of any of paragraphs 105-123, wherein said fat tissue replica contains no methylcellulose, no carrageenan, no caramel color, no konjac flour, no gum arabic, and no acacia gum.
127. The fat tissue replica of paragraph 126, wherein said fat tissue replica contains less than 1% wheat gluten.
128. The fat tissue replica of paragraph 127, wherein said fat tissue replica contains no wheat gluten.
129. The fat tissue replica of paragraph 128, wherein said fat tissue replica contains no soy protein isolate.
130. The fat tissue replica of paragraph 128, wherein said fat tissue replica contains no soy protein concentrate.
131. The fat tissue replica of paragraph 128, wherein said fat tissue replica contains no soy protein.
132. The fat tissue replica of paragraph 131, wherein said fat tissue replica contains less than 5% carbohydrates.
133. The fat tissue replica of paragraph 128, wherein said fat tissue replica contains no tofu.
134. The fat tissue replica of any of paragraphs 105-123, wherein said fat tissue replica contains no tofu, and no wheat gluten.
135. The fat tissue replica of any of paragraphs 105-123, wherein said fat tissue replica contains no soy protein, and no wheat gluten.
136. The fat tissue replica of any of paragraphs 105-123, wherein said fat tissue replica contains no animal products and less than 5% carbohydrates.
137. The fat tissue replica of any of paragraphs 105-123, wherein said fat tissue replica contains less than 1% cellulose.
138. The fat tissue replica of any of paragraphs 105-123, wherein said fat tissue replica contains less than 5% insoluble carbohydrates.
139. The fat tissue replica of any of paragraphs 105-123, wherein said fat tissue replica contains no soy protein, and less than 1% cellulose.
140. The fat tissue replica of any of paragraphs 105-123, wherein said fat tissue replica contains no soy protein, and less than 5% insoluble carbohydrates.
141. The fat tissue replica of any of paragraphs 105-123, wherein said fat tissue replica contains no wheat gluten, and less than 1% cellulose.
142. The fat tissue replica of any of paragraphs 105-123, wherein said fat tissue replica contains no wheat gluten, and less than 5% insoluble carbohydrates.
143. A connective tissue replica, comprising a protein content comprising one or more isolated, purified proteins, wherein said protein content has been assembled into structures approximating the texture and visual appearance of connective tissue or skin.
144. The connective tissue replica of paragraph 143, wherein said protein content is derived from non -animal source.
145. The connective tissue replica of paragraph 143, wherein said non-animal source is a plant source.
146. The connective tissue replica of paragraph 143, wherein said non-animal source is a genetically modified yeast or bacteria.
147. The connective tissue replica of paragraph 143, wherein said one or more isolated proteins account for 50% or more of said protein content by weight.
148. The connective tissue replica of paragraph 143, wherein said one isolated and purified protein accounts for 90% or more of said protein content by weight.
149. The connective tissue replica of paragraph 143, wherein each of said one or more isolated proteins is isolated and purified separately.
150. The connective tissue replica of paragraph 143, wherein said one or more isolated proteins are selected from the group consisting of hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofiructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin.
151. The connective tissue replica of paragraph 150, wherein said one or more isolated and purified proteins is a prolamin family protein.
152. The connective tissue replica of paragraph 150, wherein said one or more isolated and purified proteins is zein.
153. The connective tissue replica of paragraph 143, wherein said protein content is suspended in a gel.
154. The connective tissue replica of paragraph 153, wherein said gel comprises an isolated, purified cross-linking enzyme.
155. The connective tissue replica of paragraph 154, wherein said isolated, purified cross-linking enzyme is selected from the group consisting of transglutaminase, lysyl oxidases, and amine oxidases.
156. The connective tissue replica of paragraph 155, wherein said isolated, purified cross-linking enzyme is transglutaminase.
157. The connective tissue replica of paragraph 143, wherein said protein content is formed into a fiber.
158. The connective tissue replica of claim 157, wherein said fiber is produced by an extrusion process.
159. The connective tissue replica of paragraph 157, wherein said fiber is stabilized by protein crosslinks.
160. The connective tissue replica of paragraph 157, wherein said fiber contains an isolated, purified cross-linking enzyme.
161. The connective tissue replica of paragraph 160, wherein said isolated, purified cross-linking enzyme is selected from the group consisting of transglutaminase, lysyl oxidases, and amine oxidases.
162. The connective tissue replica of paragraph 161, wherein said isolated, purified cross-linking enzyme is transglutaminase.
163. A meat substitute product, comprising:
   a) a muscle replica;
   b) a fat tissue replica; and
   c) a connective tissue replica;
   wherein said muscle replica, fat tissue replica, and/or connective tissue replica are assembled in a manner that approximates the physical organization of meat.
164. The meat substitute product of paragraph 163, comprising two or more of said muscle replica, fat tissue replica, and connective tissue replica.
165. The meat substitute product of paragraph 163, wherein (i) said muscle replica accounts for 40-90 % of said product by weight, (ii) said fat tissue replica accounts for 1-60% of said product by weight, and (iii) said connective tissue replica accounts for 1-30% of said product by weight.
166. The meat substitute product of paragraph 163, comprising:
   a) 60-90% water;
   b) 5-30% protein content;
   c) 1-20% of a fat or fat replica;
   wherein said protein content comprises one or more isolated, purified plant proteins.
167. The meat substitute product of paragraph 166, wherein said protein content is derived from non-animal source.
168. The meat substitute product of paragraph 167, wherein said non-animal source is a plant source.
169. The meat substitute product of paragraph 167, wherein said non-animal source is a genetically modified yeast or bacteria.
170. The meat substitute product of paragraph 163, wherein 50% or more of said protein content by weight are one or more isolated purified proteins.
171. The meat substitute product of paragraph 170, wherein each of said one or more isolated proteins is isolated and purified separately from different plant species.
172. The meat substitute product of paragraph 170, wherein one or more of said isolated proteins is selected from the group consisting of: hemoglobin, myoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins, ribosomal proteins, actin, hexokinase, lactate dehydrogenase, fructose bisphosphate aldolase, phosphofiructokinases, triose phosphate isomerases, phosphoglycerate kinases, phosphoglycerate mutases, enolases, pyruvate kinases, glyceraldehyde-3-phosphate dehydrogenases, pyruvate decarboxylases, actins, translation elongation factors, ribulose-1,5-bisphosphate carboxylase oxygenase (rubisco), ribulose-1,5-bisphosphate carboxylase oxygenase activase (rubisco activase), albumins, glycinins, conglycinins, globulins, vicilins, conalbumin, gliadin, glutelin, gluten, glutenin, hordein, prolamin, phaseolin (protein), proteinoplast, secalin, extensins, triticeae gluten, zein, any seed storage protein, oleosins, caloleosins, steroleosins or other oil body proteins, vegetative storage protein A, vegetative storage protein B, moong seed storage 8S globulin.
173. The meat substitute product of paragraph 163, further comprising one or more isolated and purified iron-containing proteins.
174. The meat substitute product of paragraph 173, wherein said one or more isolated and purified iron-containing proteins is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, Hell's gate globin I, bacterial hemoglobins, ciliate myoglobins, and flavohemoglobins.
175. The meat substitute composition of paragraph 174 wherein said iron-containing protein comprises an amino acid sequence with at least 70% homology to SEQ ID NO 1.
176. The meat substitute product of any of paragraphs **163-175,** wherein said meat substitute product contains no methylcellulose, no carrageenan, no caramel color, no konjac flour, no gum arabic, and no acacia gum.
177. The meat substitute product of paragraph 176, wherein said meat substitute product contains less than 1% wheat gluten.
178. The meat substitute product of paragraph 177, wherein said meat substitute product contains no wheat gluten.
179. The meat substitute product of paragraph 178, wherein said meat substitute product contains no soy protein isolate.
180. The meat substitute product of paragraph 178, wherein said meat substitute product contains no soy protein concentrate.
181. The meat substitute product of paragraph 178, wherein said meat substitute product contains no soy protein.
182. The meat substitute product of paragraph 181, wherein said meat substitute product contains less than 5% carbohydrates.
183. The meat substitute product of paragraph 178, wherein said meat substitute product contains no tofu.
184. The meat substitute product of any of paragraphs 163-175, wherein said meat substitute product contains no tofu, and no wheat gluten.
185. The meat substitute product of any of paragraphs 163-175, wherein said meat substitute product contains no soy protein, and no wheat gluten.
186. The meat substitute product of any of paragraphs 163-175, wherein said meat substitute product contains no animal products and less than 5% carbohydrates.
187. The meat substitute product of any of paragraphs 163-175, wherein said meat substitute product contains less than 1% cellulose.
188. The meat substitute product of any of paragraphs 163-175, wherein said meat substitute product contains less than 5% insoluble carbohydrates.
189. The meat substitute product of any of paragraphs 163-175, wherein said meat substitute product contains no soy protein, and less than 1% cellulose.
190. The meat substitute product of any of paragraphs 163-175, wherein said meat substitute product contains no soy protein, and less than 5% insoluble carbohydrates.
191. The meat substitute product of any of paragraphs 163-175, wherein said meat substitute product contains no wheat gluten, and less than 1% cellulose.
192. The meat substitute product of any of paragraphs 163-175, wherein said meat substitute product contains no wheat gluten, and less than 5% insoluble carbohydrates.
193. A food product comprising one or more isolated, purified iron-containing proteins, wherein said food product is configured for consumption by an animal.
194. The food product of paragraph 193, wherein said one or more isolated, purified iron-containing proteins is derived from a non-animal source.
195. The food product of c paragraph 194, wherein said non-animal source is a plant source.
196. The food product of paragraph 195, wherein said plant source comprises one or more plants of the legume family.
197. The meat substitute product of paragraph 196, wherein said one or more plants of the legume family is a soy or pea plant.
198. The food product of paragraph 194, wherein said non-animal source is a genetically modified yeast or bacteria.
199. The food product of paragraph 193, wherein said iron-containing protein is selected from the group consisting of hemoglobin, myoglobin, leghemoglobin, non-symbiotic hemoglobin, chlorocruorin, erythrocruorin, neuroglobin, cytoglobin, protoglobin, truncated 2/2 globin, HbN, cyanoglobin, HbO, Glb3, and cytochromes, Hell's gate globin I, bacterial hemoglobins, ciliate myoglobins, flavohemoglobins.
200. The food product of paragraph 193, wherein said iron-containing protein comprises an amino acid sequence with at least 70% homology to SEQ ID NO 1.
201. The food product of any of paragraphs 193-200, wherein said product contains no methylcellulose,no carrageenan, no caramel color, no konjac flour, no gum arabic, and no acacia gum
202. The food product of paragraph 201, wherein said food product contains less than 1% wheat gluten.
203. The food product of paragraph 202, wherein said food product contains no wheat gluten.
204. The food product of paragraph 203, wherein said food product contains no soy protein isolate.
205. The food product of paragraph 203, wherein said food product contains no soy protein concentrate.
206. The food product of paragraph 203, wherein said food product contains no soy protein.
207. The food product of paragraph 206, wherein said food product contains less than 5% carbohydrates.
208. The food product of paragraph 203, wherein said food product contains no tofu.
209. The food product of any of paragraphs 193-200, wherein said food product contains no tofu, and no wheat gluten.
210. The food product of any of paragraphs 193-200, wherein said food product contains no soy protein,and no wheat gluten.
211. The food product of any of c paragraphs 193-200, wherein said food product contains no animal products and less than 5% carbohydrates.
212. The food product of any of paragraphs 193-200, wherein said food product contains less than 1 % cellulose.
213. The food product of any of paragraphs 193-200, wherein said food product contains less than 5 % insoluble carbohydrates.
214. The food product of any of paragraphs 193-200, wherein said food product contains no soy protein,and less than 1% cellulose.
215. The food product of any of paragraphs 193-200, wherein said food product contains no soy protein,and less than 5% insoluble carbohydrates.
216. The food product of any of paragraphs 193-200, wherein said food product contains no wheat gluten,and less than 1% cellulose.
217. The food product of any of paragraphs 193-200, wherein said food product contains no wheat gluten,and less than 5% insoluble carbohydrates.
218. A method of making a meat substitute composition, comprising:
   a) isolating and purifying one or more proteins; and
   b) assembling said one or more proteins into a physical organization that approximates the physical organization of meat.
219. A method of making a muscle tissue replica, comprising:
   a) isolating and purifying one or more proteins; and
   b) assembling said one or more proteins into a physical organization that approximates the physical organization of skeletal muscle.
220. A method of making a fat tissue replica, comprising:
   a) isolating and purifying one or more proteins;
   b) preparing a solution comprising one or more proteins;
   c) emulsifying one or more fats in said solution; and
   d) stabilizing said solution into a gelled emulsification with one or more cross-linking reagents.
221. A method of making a connective tissue replica comprising:
   a) isolating and purifying one or more proteins; and
   b) precipitating said one or more proteins,
   wherein said precipitating results in said one or more proteins forming physical structures approximating the physical organization of connective tissue.
222. The method of paragraph 221, wherein said precipitating comprises
   a) solubilizing said one or more proteins in a first solution; and
   b) extruding said first solution into a second solution,
   c) wherein said one or more proteins is insoluble in said second solution, wherein said extruding induces precipitation of said one or more proteins.

## Claims

1. A meat replica comprising an iron-carrying protein, wherein:
a. the meat replica comprises 0.05% or more of the iron carrying protein by dry weight or total weight;
b. the iron-carrying protein is selected from hemoglobin, myoglobin, neuroglobin, cytoglobin, leghemoglobin, non-symbiotic hemoglobin, Hell's gate globin **I,** bacterial hemoglobins, ciliate myoglobins and flavohemoglobins; and
c..the iron-carrying protein has been isolated and purified from a non-animal source selected from a plant, fungus or genetically modified organisms such as bacteria or yeast.

2. The meat replica according to claim 1, wherein the replica comprises 0.1% or more, 0.5% or more, or 0.8% or more of the iron carrying protein by dry weight or total weight.

3. The meat replica according to claim 1 or claim 2, wherein the iron-carrying protein is leghemoglobin.

4. The meat replica according any one of the preceding claims, wherein the meat replica comprises 0.4-1.0% leghemoglobin.

5. The meat replica according to claim 1 or claim 2, wherein the iron-carrying protein is myoglobin.

6. The meat replica according to claim 5 wherein the myoglobin has been isolated and purified from a genetically modified organism non-animal source, such as bacteria or yeast.

7. The meat replica according to any of claims 1 to 6, wherein the meat replica includes one or more reactants selected from the group consisting of fats, protein, amino acids, peptides, nucleotides, organic acids, sulfur compounds, sugars and carbohydrates.

8. The meat replica according to claim 7, wherein the reactants are selected from the group consisting of amino acids, fats and sugars.

9. The meat replica according to any one of claims 1 to **4,** 7 or 8, wherein the meat replica comprises pea flour, sunflower oil, glucose and reduced leghemoglobin.

10. A meat replica comprising a heme protein, wherein:
a. the meat replica contains between 0.01 % and 5 % by weight of the heme protein; and
b. the heme protein is selected from hemoglobin, myoglobin, neuroglobin, cytoglobin, leghemoglobin, non-symbiotic hemoglobin, Hell's gate globin **I,** bacterial hemoglobins, ciliate myoglobins and flavohemoglobins; and
c. the heme protein has been isolated and purified from a non-animal source selected from a plant, fungus or genetically modified organisms such as bacteria or yeast.

11. The meat replica according to claim 10, wherein the iron-carrying protein is leghemoglobin or myoglobin.

12. The meat replica according to claim 10 or 11, wherein the meat replica includes one or more reactants selected from the group consisting of fats, protein, amino acids, peptides, nucleotides, organic acids, sulfur compounds, sugars and carbohydrates.

13. The meat replica according to any one of claims 10 to 12, wherein the reactants are selected from the group consisting of amino acids, fats and sugars.
